(19) Europäisches Patentamt
European Patent Office
Office européen des brevets

(11) **EP 4 664 879 A1**

(12) **EUROPEAN PATENT APPLICATION**

(43) Date of publication:
**17.12.2025 Bulletin 2025/51**

(21) Application number: **24315290.7**

(22) Date of filing: **13.06.2024**

(51) International Patent Classification (IPC):
**H04N 19/105** (2014.01)    **H04N 19/11** (2014.01)
**H04N 19/176** (2014.01)    **H04N 19/593** (2014.01)

(52) Cooperative Patent Classification (CPC):
**H04N 19/105; H04N 19/11; H04N 19/176;
H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing 100085 (CN)**

(72) Inventors:
• **Ghaznavi Youvalari, Ramin
Beijing, 100085 (CN)**
• **Abdoli, Mohsen
Beijing, 100085 (CN)**
• **Tissier, Alexandre
Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR OBTAINING ONE OR MORE INTRA PREDICTION MODES (IPMS)**

(57)    A method and an apparatus of processing one or more blocks of a picture obtain one or more intra prediction modes, IPMs, using one or more prediction samples of the block obtained by a certain prediction.

Obtaining one or more intra prediction modes, IPMs, using one or more prediction samples of the block of the picture obtained by a certain prediction.  — S100

Fig. 14

EP 4 664 879 A1

## Description

### Technical Field

The present disclosure generally relates to the field of encoding/decoding pictures, images or videos, and embodiments of the present disclosure concern improvements regarding a prediction. More specific embodiments of the present disclosure relate to obtaining one or more intra prediction modes (IPMs) that may be used in one or more aspects of tools of a codec, e.g., for a transform selection for certain modes.

### Background

The encoding and decoding of a picture, an image or a video is performed in accordance with a certain standard, for example, in accordance with the advanced video coding, AVC standard (see reference [1]), the high efficiency video coding, HEVC, standard (see reference [2]) or the versatile video coding, VVC, standard (see reference [3]).
For encoding and decoding of a picture, a intra prediction mode (IPM) may be used, e.g., for a combined inter and intra prediction (CIIP) prediction or for a transform selection for certain modes.
Thus, there is a need to provide further improvements for obtaining IPM(s) that may be applied for encoding and decoding of a picture, an image or a video.

### Summary

The present disclosure provides a method of processing one or more blocks of a picture, the method comprising: obtaining one or more intra prediction modes, IPMs, using one or more prediction samples of the block obtained by a certain prediction.
Optionally, the certain prediction comprises:

- an inter prediction, or
- a block vector-based prediction, e.g., an Intra block copy, IBC, process or an intra template matching prediction, IntraTMP, process.

Optionally, the inter prediction comprises a full-pel or fractional-pel motion compensated prediction obtaining a motion compensated prediction block, and wherein the motion compensated prediction block may comprise a uni-prediction, bi-prediction or multi-hypothesis prediction block.
Optionally, the method comprises performing one or more of the following using the one or more obtained IPMs:

- a combined intra and inter prediction, CIIP, process,
- an intra prediction process of future blocks,
- a transform selection of the current block,
- a transform selection of a co-located chroma block.

Optionally, the one or more IPMs are obtained by using a texture analysis method, e.g., by using a decoder side intra mode derivation, DIMD, process or a template-based intra mode derivation, TIMD, process.
Optionally, the method comprises:

- obtaining a prediction histogram of gradients, prediction HoG, using the one or more prediction samples obtained by the certain prediction, and
- obtaining from the prediction HoG the one or more IPMs, e.g., by selecting from the HoG those IPMs which are associated with a gradient exceeding a predefined threshold.

Optionally, the one or more IPMs are obtained by using the one or more prediction samples of the block obtained by the certain prediction and one or more template samples from a reconstructed neighborhood of the block.
Optionally,

the reconstructed neighborhood of the block includes an above template and a left side template, a prediction histogram of gradients, prediction HoG, is obtained using the one or more prediction samples obtained by the certain prediction, wherein an above template HoG is obtained using one or more above template samples, and wherein a left side template HoG is obtained using one or more left side template samples, and at least one of the above and left side template HoGs is selected for combining with the prediction HoG into a combined HoG.

Optionally, the one or more of the template samples are selected according to

- a similarity between the template samples and the prediction samples, and wherein at least one of the above template HoG and the left side template HoG is selected using a similarity metric, or
- a mean value of the prediction samples and a mean value of the template samples, e.g., Direct-Current, DC, or average values of the prediction samples, and DC or average values of the template samples, or
- an index or a flag identifying the template HoGs to be combined with the prediction HoG into a combined HoG and obtained, e.g. from a data stream, e.g., a bitstream, including data representing the picture.

Optionally, the method comprises:

- weighting one or more of the prediction HoG, the above template HoG and the left side template HoG before combining them into the combined HoG.

Optionally,

- N IPM candidates are obtained, N being an integer with $N \geq 2$,
- the obtained IPM candidates are sorted based on distortion costs, wherein the distortion costs may be obtained using a defined template of a reconstructed neighborhood of the block, and
- the IPM candidate with the lowest distortion cost over is selected from the IPM candidates as the IPM.

Optionally,

- each IPM candidate is used to predict template samples of the defined template, and
- the distortion costs is determined using a distortion metric for the template prediction, wherein the template samples may be predicted using a template-based intra mode derivation, TIMD, process.

The present disclosure provides a non-transitory computer-readable storage medium comprising instructions which, when executed by a computer, cause the computer to carry out the method of any one of the embodiments of the present disclosure..

The present disclosure provides an apparatus of processing one or more blocks of a picture, the apparatus comprising:

an intra prediction mode, IPM, determination module configured to obtain one or more intra prediction modes, IPMs, using one or more prediction samples of the block obtained by a certain prediction.

The present disclosure provides a data stream having encoded thereinto a picture, wherein the data stream comprises:
a flag, the flag indicating a best preforming combination of one or more prediction samples of a block of the picture with one or more template samples from a reconstructed neighborhood of the block for obtaining one or more intra prediction modes, IPMs, usable, e.g., for a transform selection of the block.

The technical solutions provided according to embodiments of the present disclosure have the following beneficial effects.

In prior art approaches, certain aspects or tools of the codec, like a CIIP prediction or a transform selection, may use derived intra prediction modes which may not represent a current block's characteristics in an optimal way, thereby degrading the overall performance of the tool of the codec using the derived intra prediction mode.

Embodiments of the present disclosure addresses the above drawbacks by approaches for improving the performance of one or more tools of the codec using a derived intra prediction mode by deriving the intra prediction in a more optimal way.

It is to be understood that the content described in this section is not intended to identify key or critical features of the embodiment of the present disclosure, nor is it intended to limit the scope of the present disclosure. Other features of the present disclosure become readily apparent from the following description.

**Brief Description of the Drawings**

The drawings are explanatory and serve to explain the present disclosure, and are not to be construed to limit the present disclosure to the illustrated embodiments.

Fig. 1      is a block diagram of a conventional video encoder;

Fig. 2      is a block diagram of a conventional video decoder;

Fig. 3      illustrates a Low-Frequency Non-Separable Transform (LFNST) process;

Fig. 4(A)   illustrates a Region-Of-Interest (ROI) of a CU for a transform LFNST16;

Fig. 4(B)   illustrates a Region-Of-Interest (ROI) of a CU for a transform LFNST8;

Fig. 5      illustrates a table showing the mapping of intra prediction modes to the LFNST set index;

Fig. 6      illustrates an overview of proposed non-separable primary transforms (NSPTs) among existing LFNSTs.

Fig. 7      illustrates a context modeling for LFNST/NSPT coefficients;

Fig. 8      illustrates the use of MIP prediction samples to build a histogram of gradients (HoG);

Fig. 9      illustrates template-based intra mode derivation (TIMD) templates for a cost calculation;

Fig. 10     illustrates a combined inter and intra prediction (CIIP) prediction;

Fig. 11     illustrates top and left neighboring blocks used in CIIP weight derivation;

Fig. 12     illustrates an intra template matching search area for the Intra template matching prediction (IntraTMP) mode;

Fig. 13     illustrates an example of a block and the associated templates;

Fig. 14     illustrates a flow diagram of a method of obtaining one or more intra prediction modes (IPMs) in accordance with embodiments of the present disclosure;

Fig. 15     illustrates a process of deriving IPMs for a CIIP coded block in accordance with embodiments of the present disclosure using an inter prediction as a basis for deriving the IPMs;

Fig. 16     illustrates an inter prediction or motion compensated prediction used in the CIIP process of Fig. 15 using, in accordance with embodiments of the present disclosure, a bi-prediction from two different reference frames;

Fig. 17     illustrates an inter prediction or motion compensated prediction used in the CIIP process of Fig. 15 using, in accordance with embodiments of the present disclosure, a bi-prediction from the same reference frame;

Fig. 18     illustrates a process of deriving IPMs for a CIIP coded block in accordance with embodiments of the present disclosure using an intra block copy (IBC) prediction as a basis for deriving the IPMs

Fig. 19     illustrates an IBC prediction used in the CIIP process of Fig. 18 using, in accordance with embodiments of the present disclosure, a bi-prediction from the current frame;

Fig. 20     illustrates a process of deriving IPMs for a CIIP coded block using both inter prediction and template samples in accordance with embodiments of the present disclosure;

Fig. 21     illustrates deriving intra prediction modes, which are used for obtaining the IPM(s), using both inter prediction samples as well as template samples in accordance with embodiments of the present disclosure;

Fig. 22     illustrates a combining of histogram of gradients for a IPM derivation from all template samples and prediction samples in accordance with embodiments of the present disclosure;

Fig. 23     illustrates a combining of histogram of gradients for a IPM derivation from only the above template samples and prediction samples in accordance with embodiments of the present disclosure;

Fig. 24     illustrates a flow diagram of an embodiment of deriving or selecting a IPM using a template prediction based IPM selection.

Fig. 25     illustrates a IPM derivation from IPM list filled by nearby IPM modes in accordance with embodiments of the present disclosure;

Fig. 26     illustrates a flow diagram of a method for decoding an encoded data stream in accordance with embodiments of the present disclosure;

Fig. 27     illustrates a flow diagram of a method for encoding a picture into an encoded data stream in accordance with embodiments of the present disclosure;

Fig. 28     illustrates a block diagram of an apparatus of predicting one or more blocks of a picture in accordance with embodiments of the present disclosure;

Fig. 29     illustrates a block diagram of a decoder for decoding an encoded data stream in accordance with embodiments of the present disclosure;

Fig. 30     illustrates a block diagram of an encoder for encoding a picture into an encoded data stream in accordance with embodiments of the present disclosure;

Fig. 31     illustrates a data stream in accordance with embodiments of the present disclosure; and

Fig. 32     illustrates a block diagram illustrating an electronic device according to embodiments of the present disclosure.

**Detailed Description**

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

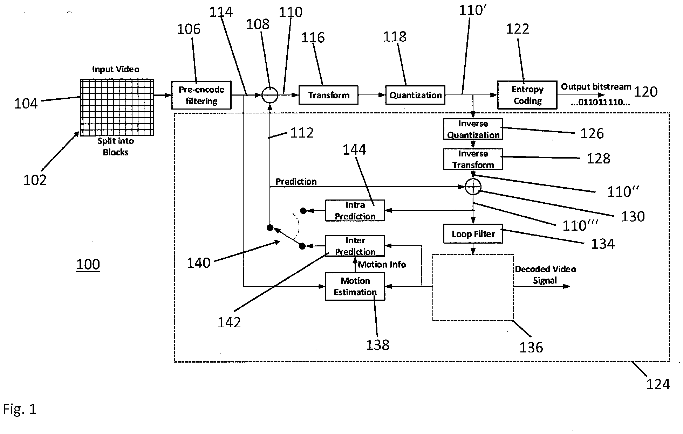

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

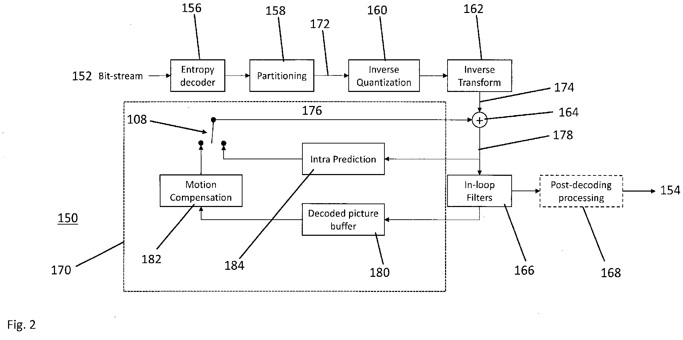

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

Transform coding in VVC

In VVC, large block-size transforms, up to 64×64 in size, are enabled, which is primarily useful for higher resolution video, e.g., 1080p and 4K sequences. High frequency transform coefficients are zeroed out for the transform blocks with a size (width or height, or both width and height) equal to 64, so that only the lower-frequency coefficients are retained. For example, for a M×N transform block, with M as the block width and N as the block height, when M is equal to 64, only the left 32 columns of transform coefficients are kept. Similarly, when N is equal to 64, only the top 32 rows of transform coefficients are kept. When a transform skip mode is used for a large block, the entire block is used without zeroing out any values. In addition, a transform shift is removed in the transform skip mode.

*Multiple transform selection (MTS) for core transform*

In addition to DCT-II which has been employed in HEVC, a Multiple Transform Selection (MTS) scheme is used for residual coding both inter and intra coded blocks. It uses multiple selected transforms from the DCT8/DST7. The transform matrices are DST-VII and DCT-VIII. The table below shows the basis functions of the selected DST/DCT.

Transform basis functions of DCT-II/ VIII and DSTVII for N-point input

| Transform Type | Basis function $T_i(j)$, $i, j = 0, 1,..., N-1$ |
|---|---|
| DCT-II | $$T_i(j) = \omega_0 \cdot \sqrt{\frac{2}{N}} \cdot \cos\left(\frac{\pi \cdot i \cdot (2j + 1)}{2N}\right)$$ where, $$\omega_0 = \begin{cases} \sqrt{\frac{2}{N}} & i = 0 \\ 1 & i \neq 0 \end{cases}$$ |
| DCT-VIII | $$T_i(j) = \sqrt{\frac{4}{2N + 1}} \cdot \cos\left(\frac{\pi \cdot (2i + 1) \cdot (2j + 1)}{4N + 2}\right)$$ |
| DST-VII | $$T_i(j) = \sqrt{\frac{4}{2N + 1}} \cdot \sin\left(\frac{\pi \cdot (2i + 1) \cdot (j + 1)}{2N + 1}\right)$$ |

In order to keep the orthogonality of the transform matrix, the transform matrices are quantized more accurately than the transform matrices in HEVC. To keep the intermediate values of the transformed coefficients within the 16-bit range, after horizontal and after vertical transform, all the coefficients are to have 10-bit.

In order to control the MTS scheme, separate enabling flags are specified at the Sequence Parameter Set (SPS) level for intra and inter, respectively. When MTS is enabled at SPS, a CU level flag is signaled to indicate whether MTS is applied or not. MTS may be applied only for luma. The MTS signaling is skipped when one of the below conditions is applied.

- The position of the last significant coefficient for the luma transform block (TB) is less than 1, i.e., DC only.
- The last significant coefficient of the luma TB is located inside the MTS zero-out region.

If a MTS CU flag is equal to zero, then DCT2 is applied in both directions. However, if the MTS CU flag is equal to one, then two other flags are additionally signaled to indicate the transform type for the horizontal and vertical directions, respectively. A transform and signaling mapping table is shown below. A unified transform selection for intra sub-partitions (ISP) and an implicit MTS is used by removing the intra-mode and block-shape dependencies. If a current block is in ISP mode or if the current block is an intra block and both intra and inter explicit MTS is on, then only DST7 is used for both horizontal and vertical transform cores. When it comes to transform matrix precision, 8-bit primary transform cores are used. Therefore, all the transform cores used in HEVC are kept the same, including 4-point DCT-2 and DST-7, 8-point, 16-point and 32-point DCT-2. Also, other transform cores including 64-point DCT-2, 4-point DCT-8, 8-point, 16-point, 32-point DST-7 and DCT-8, use 8-bit primary transform cores.

Transform and signaling mapping table

| MTS_CU_flag | MTS_Hor_flag | MTS_Ver_flag | Intra/inter | |
|---|---|---|---|---|
| | | | Horizontal | Vertical |
| 0 | | | DCT2 | |
| 1 | 0 | 0 | DST7 | DST7 |
| | 0 | 1 | DCT8 | DST7 |
| | 1 | 0 | DST7 | DCT8 |
| | 1 | 1 | DCT8 | DCT8 |

To reduce the complexity of large size DST-7 and DCT-8 blocks, high frequency transform coefficients are zeroed out for the DST-7 and DCT-8 blocks with a size (width or height, or both width and height) equal to 32. Only the coefficients within the 16x16 lower-frequency region are retained.

As in HEVC, the residual of a block may be coded using a transform skip mode. To avoid a redundancy of syntax coding, the transform skip flag is not signaled when the CU level MTS_CU_flag is not equal to zero. An implicit MTS transform is set to DCT2 when a low-frequency non-separable transform (LFNST) or a matrix-based intra prediction (MIP) is activated for the current CU. Also the implicit MTS may be still enabled when MTS is enable for inter coded blocks.

*Low-frequency non-separable transform (LFNST)*

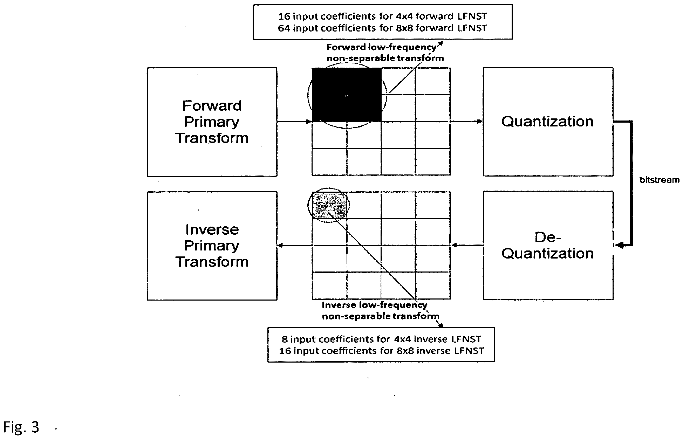

In VVC, LFNST is applied between the forward primary transform and the quantization (at encoder) and between the de-quantization and the inverse primary transform (at decoder side) as shown in Fig. 3. In LFNST, a 4x4 non-separable transform or an 8x8 non-separable transform is applied according to block size. For example, 4x4 LFNST is applied for small blocks (i.e., min(width, height) < 8) and 8x8 LFNST is applied for larger blocks (i.e., min(width, height) > 4).

The application of a non-separable transform, which is being used in LFNST, is as follows:

To apply a 4x4 LFNST, the 4x4 input block X

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

is first represented as a vector X:

$$\vec{X} = [X_{00} \quad X_{01} \quad X_{02} \quad X_{03} \quad X_{10} \quad X_{11} \quad X_{12} \quad X_{13} \quad X_{20} \quad X_{21} \quad X_{22} \quad X_{23} \quad X_{30} \quad X_{31} \quad X_{32} \quad X_{33}]^T$$

The non-separable transform is obtained as $\vec{F} = T \cdot \vec{X}$, where $\vec{F}$ indicates the transform coefficient vector, and T is a 16x16 transform matrix. The 16x1 coefficient vector $\vec{F}$ is subsequently re-organized as 4x4 block using the scanning order for that block (horizontal, vertical or diagonal). The coefficients with smaller index are placed with the smaller scanning index in the 4x4 coefficient block.

*Reduced Non-separable transform*

LFNST (low-frequency non-separable transform) is based on a direct matrix multiplication approach to apply a non-separable transform so that it is implemented in a single pass without multiple iterations. However, the non-separable transform matrix dimension needs to be reduced to minimize computational complexity and memory space to store the transform coefficients. Hence, a reduced non-separable transform (RST) method is used in LFNST. The main idea of the reduced non-separable transform is to map a N (N is commonly equal to 64 for an 8x8 Non-Separable Secondary Transforms (NSST)) dimensional vector to an R dimensional vector in a different space, where N/R (R < N) is the reduction factor. Hence, instead of a NxN matrix, the RST matrix becomes an R×N matrix as follows:

$$T_{RxN} = \begin{bmatrix} t_{11} & t_{12} & t_{13} & \cdots & t_{1N} \\ t_{21} & t_{22} & t_{23} & & t_{2N} \\ & \vdots & & \ddots & \vdots \\ t_{R1} & t_{R2} & t_{R3} & \cdots & t_{RN} \end{bmatrix}$$

where the R rows of the transform are R bases of the N dimensional space. The inverse transform matrix for RST is the transpose of its forward transform. For an 8x8 LFNST, a reduction factor of 4 is applied, and a 64x64 direct matrix, which is a conventional 8x8 non-separable transform matrix size, is reduced to a 16x48 direct matrix. Hence, the 48×16 inverse RST matrix is used at the decoder side to generate core (primary) transform coefficients in 8×8 top-left regions. When 16x48 matrices are applied instead of 16x64 matrices with the same transform set configuration, each of which takes 48 input data from three 4x4 blocks in a top-left 8x8 block excluding a right-bottom 4x4 block. With the help of the reduced dimension, memory usage for storing all LFNST matrices is reduced from 10KB to 8KB with reasonable performance drop. In order to reduce complexity LFNST is restricted to be applicable only if all coefficients outside the first coefficient sub-group are non-significant. Hence, all primary-only transform coefficients have to be zero when LFNST is applied. This allows a conditioning of the LFNST index signaling on the last-significant position, and hence avoids the extra coefficient scanning in the current LFNST design, which is needed for checking for significant coefficients at specific positions only. The worst-case handling of LFNST (in terms of multiplications per pixel) restricts the non-separable transforms for 4x4 and 8x8 blocks to 8x16 and 8x48 transforms, respectively. In those cases, the last-significant scan position has to be less than 8 when LFNST is applied, for other sizes less than 16. For blocks with a shape of 4xN and Nx4 and N > 8, the proposed restriction implies that the LFNST is now applied only once, and to the top-left 4x4 region only. As all primary-only coefficients are zero when LFNST is applied, the number of operations needed for the primary transforms is reduced in such cases. From an encoder perspective, the quantization of coefficients is remarkably simplified when LFNST transforms are tested. A rate-distortion optimized quantization has to be done at maximum for the first 16 coefficients (in scan order), the remaining coefficients are enforced to be zero.

*LFNST transform selection*

In total, there are 4 transform sets, and 2 non-separable transform matrices (kernels) per transform set are used in LFNST. The mapping from the intra prediction mode to the transform set is pre-defined as shown in the table below. If one of three Cross-Component Linear Model (CCLM) modes (INTRA_LT_CCLM, INTRA_T_CCLM or INTRA_L_CCLM) is used for the current block (81 <= predModeIntra <= 83), transform set 0 is selected for the current chroma block. For each transform set, the selected non-separable secondary transform candidate is further specified by the explicitly signaled LFNST index. The index is signaled in a bit-stream once per Intra CU after the transform coefficients.

Transform selection table

| IntraPredMode | Transform set index |
|---|---|
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |
| 56 <= IntraPredMode<= 80 | 1 |
| 81 <= IntraPredMode<= 83 | 0 |

*LFNST index Signaling and interaction with other tools*

Since LFNST is restricted to be applicable only if all coefficients outside the first coefficient sub-group are non-significant, the LFNST index coding depends on the position of the last significant coefficient. In addition, the LFNST index is context coded but does not depend on the intra prediction mode, and only the first bin is context coded. Furthermore, LFNST is applied for intra CU in both intra and inter slices, and for both Luma and Chroma. If a dual tree is enabled, LFNST indices for Luma and Chroma are signaled separately. For an inter slice mode (the dual tree is disabled), a single LFNST index is signaled and used for both Luma and Chroma.

Considering that a large CU being greater than 64x64 is implicitly split (TU tiling) due to the existing maximum transform size restriction (64x64), an LFNST index search may increase data buffering by four times for a certain number of decode pipeline stages. Therefore, the maximum size that LFNST is allowed is restricted to 64x64. Note that LFNST is enabled with DCT2 only. The LFNST index signaling is placed before the MTS index signaling.

From the use of scaling matrices for perceptual quantization is not evident that the scaling matrices that are specified for the primary matrices may be useful for LFNST coefficients. Hence, using the scaling matrices for LFNST coefficients is not allowed. For a single-tree partition mode, a chroma LFNST is not applied.

Transform coding in Enhanced Compression Model (ECM)

In the current VVC design, for MTS, only DST7 and DCT8 transform kernels are utilized which are used for intra and inter coding.

Additional primary transforms including DCT5, DST4, DST1, and an identity transform (IDT) are employed. Also, a MTS set is made dependent on the TU size and intra mode information. For blocks predicted via an intra template matching prediction (IntraTMP), a Decoder side intra mode derivation (DIMD) process is used on the prediction block to derive an intra mode that is used for the transform selection. Specifically, a horizontal gradient and a vertical gradient are obtained for each predicted sample to build a histogram of gradients (HoG). Then the intra prediction mode with the largest histogram amplitude values is used to select the MTS transform set.

Overall, 16 different TU sizes are considered, and for each TU size 5 different classes are considered depending on intra-mode information. For each class, 1, 4 or 6 different transform pairs are considered. The number of intra MTS candidates are adaptively selected (between 1, 4 and 6 MTS candidates) depending on the sum of absolute value of the transform coefficients. The sum is compared against two fixed thresholds to determine the total number of allowed MTS candidates:

1 candidate: sum <= th0
4 candidates: th0 < sum <= th1
6 candidates: sum > th1

Although a total of 80 different classes are considered, some of the different classes often share exactly the same transform set. So there are 58 (less than 80) unique entries in the resultant look-up-table (LUT).

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80.

*Inter MTS optimization in ECM*

For the MTS of inter-coded CUs, four candidates: {(DST7, DST7), (DST7, DCT8), (DCT8, DST7), (DCT8, DCT8)} are used for every CU. For the larger resolution sequences (width > 1080) the maximum CU size for Inter-MTS usage is set to 32 (i.e., Inter-MTS is used for CU with a width <=32 and a height <=32), and for the remaining sequences (smaller resolution) it is set to 16. For 4-pt, 8-pt and 16-pt transforms, the current Adaptive Multiple Transform (AMT) cores, i.e., DST-7 and DCT-8, are replaced with separable Karhunen-Loève Transforms (KLTs), as proposed in JVET-J0021.

*LFNST extension with large kernel in ECM*

The LFNST design in VVC is extended as follows:

- The number of LFNST sets (S) and candidates (C) are extended to S=35 and C=3, and the LFNST set (lfnstTrSetIdx) for a given intra mode (predModeIntra) is derived according to the following formula:

  o For predModeIntra < 2, lfnstTrSetIdx is equal to 2
  ∘ lfnstTrSetIdx = predModeIntra, for predModeIntra in [0,34]
  ∘ lfnstTrSetIdx = 68 - predModeIntra, for predModeIntra in [35,66]

- Three different kernels, LFNST4, LFNST8, and LFNST16, are defined to indicate LFNST kernel sets, which are applied to 4xN/Nx4 (N≥4), 8xN/Nx8 (N≥8), and MxN (M, N≥16), respectively.

The kernel dimensions are specified by:

$$(LFSNT4, LFNST8^*, LFNST16^*) = (16 \times 16, 32 \times 64, 32 \times 96)$$

The forward LFNST is applied to the top-left low frequency region, which is called the Region-Of-Interest (ROI). When LFNST is applied, primary-transformed coefficients that exist in the region other than ROI are zeroed out, which is not changed from the VVC standard.

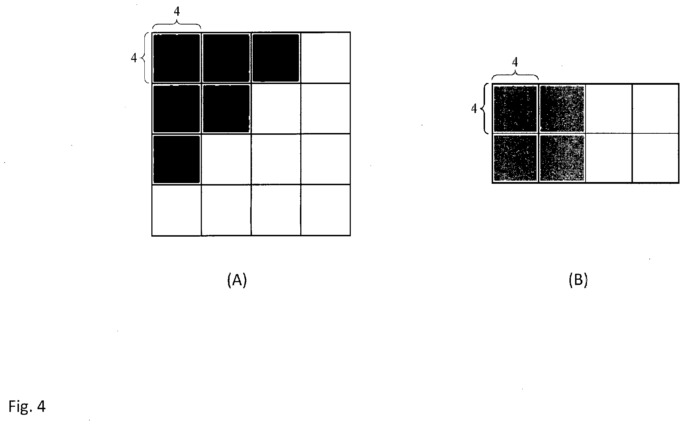

The ROI for LFNST16 is depicted in Fig. 4(A). It consists of six 4x4 sub-blocks, which are consecutive in scan order. Since the number of input samples is 96, the transform matrix for forward LFNST16 may be Rx96. R may be chosen to be 32, and 32 coefficients (two 4x4 sub-blocks) are generated from forward LFNST16 accordingly, which are placed following the coefficient scan order.

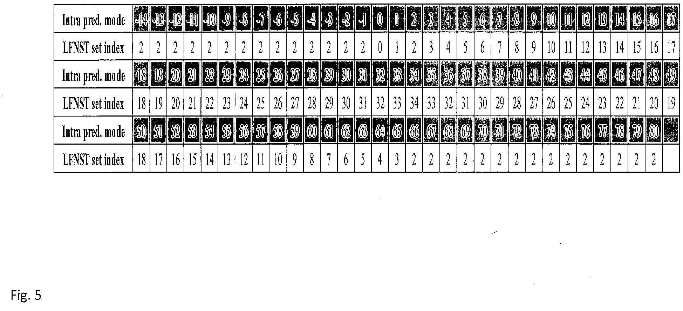

The ROI for LFNST8 is shown in Fig. 4(B). The forward LFNST8 matrix may be Rx64 and R is chosen to be 32. The generated coefficients are located in the same manner as with LFNST16. The mapping from intra prediction modes to these sets is shown in the Table illustrated in Fig. 5.

*Non-separable primary transform (NSPT) for intra coding*

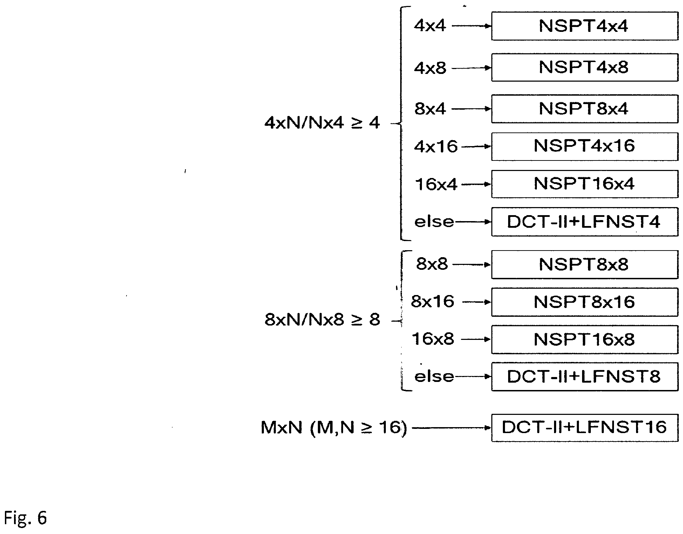

The separable DCT-II plus LFNST transform combinations are replaced with NSPT for the block shapes 4x4, 4x8, 8x4 and 8x8, 4x16, 16x4, 8x16 and 16x8. The affected block sizes are summarized in Fig. 6 which illustrates an overview of proposed NSPTs among existing LFNSTs.

All NSPTs consist of 35 sets and 3 candidates (similar to the current LFNST). The kernels of NSPTs have the following shapes:

- NSPT4x4: 16x16
- NSPT4x8/NSPT8x4: 32x20
- NSPT8x8: 64x32
- NSPT4x16/NSPT16x4:64x24
- NSPT8x16/NSPT16x8: 128x40
- NSPT4x32/NSPT32x4: 128x20
- NSPT8x32/NSPT32x8: 256x24

Therefore, 12, 32, 40 and 88 coefficients are zeroed-out using NSPT4x8/NSPT8x4, NSPT8x8, NSPT4x16/NSPT16x4 and NSPT8x16/NSPT16x8 respectively. For NSPT4x32/NSPT32x4 and NSPT8x32/NSPT32x8, the remaining 108 and 232 positions in each transform block are zeroed-out, respectively.

*NSPT/LFNST context modeling for transform coefficient coding*

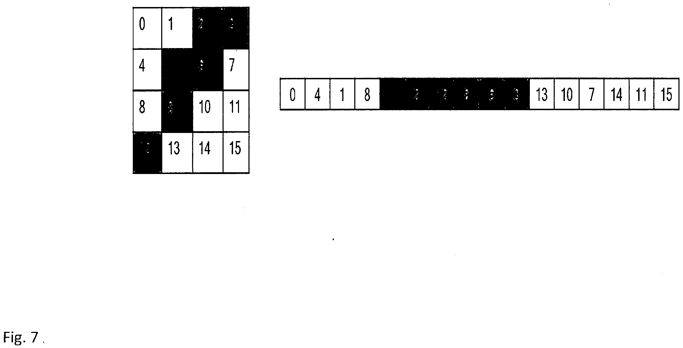

For the coding of LFNST/NSPT coefficients, a modified context model using the previous 5 coefficients in the coding order are used for context derivation instead of the 2D coefficient neighborhood. Fig. 7 illustrates the context modeling for LFNST/NSPT coefficients. The lfnstIdx is signaled after all last_sig_coeff_pos syntax elements in a CU since lfsntIdx is required for parsing the transform coefficients.

*Utilizing LFNST/NSPT for MIP, intraTMP and inter coding*

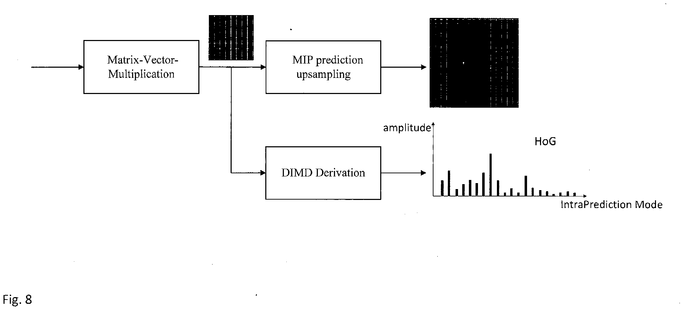

To utilize LFNST/NSPT for MIP, intraTMP and inter coding, a virtual intra prediction mode (VIPM) is employed. Each VIPM represents a kind of feature, for example, a specific direction. The VIPM is derived by applying a DIMD-like process to the prediction block. The horizontal and vertical gradients of pixels inside the prediction block are obtained using a Sobel operator and the horizontal and vertical gradients of each pixel are used to derive a direction. The amplitudes of the gradient of each pixel are accumulated for the corresponding direction. The intra prediction mode corresponding to the strongest accumulation is selected as the VIPM. With the VIPM, the transform set of LFNST/NSPT may be derived.
For MIP, the DIMD-like process is done before upsampling. Specifically, a horizontal gradient and a vertical gradient are obtained for each predicted sample to build a HoG, as is shown in Fig. 8. Then the intra prediction mode with the largest histogram amplitude value is used to determine the LFNST transform set and the LFNST Transpose flag.
For inter coding, the kernel mapping method is the same as that for intra LFNST/NSPT.

Description of relevant tools in Enhanced Compression Model (ECM)

A brief description of relevant ECM tools is provided here. More information may be obtained from the JVET-AG2025 document.

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in IntraTMP or intra clock copy (IBC)) are compared to a planar prediction on the reconstructed template. The template cost (sum of absolute transform difference, SATD) is used to select the best predictor among them.
The division operations in weight derivation are performed utilizing the same lookup table (LUT) based integerization scheme used by the CCLM. For example, the division operation in the orientation determination

$$Orient = G_y/G_x$$

is obtained, e.g., computed by the following LUT-based scheme:

$$x = \text{Floor}(\,\text{Log2}(\,Gx\,)\,)$$

$$normDiff = (\,(\,Gx << 4\,) >> x\,)\,\&\,15$$

$$x += (\,3 + (\,normDiff\,\,!= 0\,)\,?\,1 : 0\,)$$

$$Orient = (Gy*\,(\,\text{DivSigTable}[\,normDiff\,]\,|\,8\,) + (\,1 << (\,x\text{-}1\,)\,)) >> x$$

where

$$\text{DivSigTable}[16] = \{\,0, 7, 6, 5, 5, 4, 4, 3, 3, 2, 2, 1, 1, 1, 1, 0\,\}.$$

For a block of size $W \times H$, the weight for each of the five derived modes is modified if one of the above or left histogram magnitudes is twice larger than the other one. In this case, the weights are location dependent and computed as follows:

If the above histogram is twice the left, then:

$$w_i(x,y) = wDimd_i + \Delta_i - 2\Delta_i \frac{y}{(H-1)} \cdot$$

If the left histogram is twice the above, then:

$$w_i(x,y) = wDimd_i + \Delta_i - 2\Delta_i \frac{x}{(W-1)},$$

where *wDimd_i* is the unmodified uniform weight of the DIMD selected as in JVET-O0449, $\Delta_i$ is pre-defined and set to 10.

The derived intra modes are included into a primary list of intra most probable modes (MPM), so the DIMD process is performed before the MPM list is constructed. The primary derived intra mode of a DIMD block is stored with a block and is used for MPM list construction of the neighboring blocks.

Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

*Fusion for template-based intra mode derivation (TIMD)*

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e. DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:

- The non-angular intra prediction mode is different from the two selected intra prediction modes.
- costMode3 < 1.5*costModel, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost:

$$weight_i = \frac{sumSATD - costMode_i}{2 \times sumSATD}, \quad sumSATD = \sum_{j=1}^{3} costMode_i.$$

Otherwise, the non-angular intra prediction mode is not used in the prediction.

The costs of the two selected modes are compared with a threshold, and the cost factor of 2 may be applied as follows:

$$costMode2 < 2*costMode1.$$

If this condition is true, the fusion is applied, otherwise the only model is used.

The weights of the modes are computed from their SATD costs as follows:

$$weight1 = costMode2 / (costMode1 + costMode2)$$

$$weight2 = 1 - weight1$$

The division operations are conducted using the same lookup table (LUT) based integerization scheme used by the CCLM.

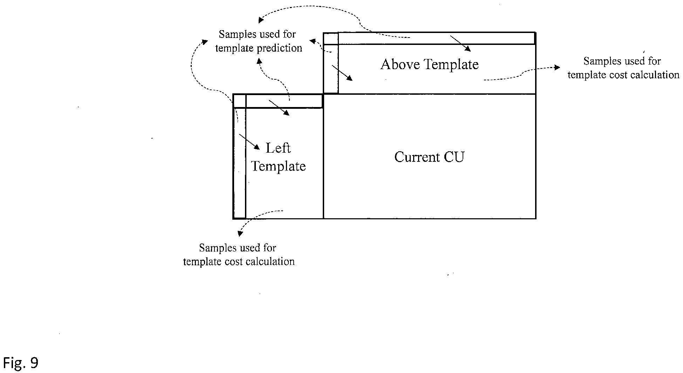

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 9 illustrating the TIMD templates for the cost determination or calculation

*Combined inter and intra prediction (CIIP)*

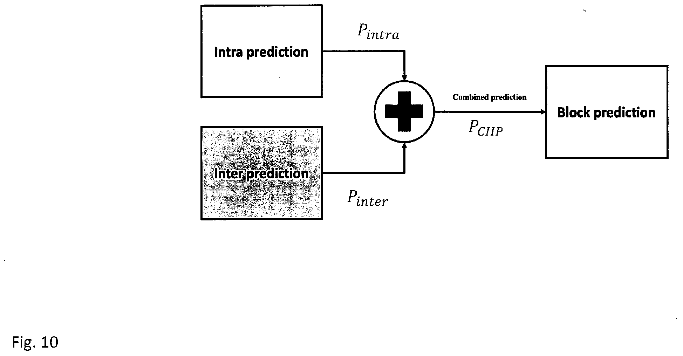

In VVC, when a CU is coded in merge mode, if the CU contains at least 64 luma samples (that is, CU width times CU height is equal to or larger than 64), and if both CU width and CU height are less than 128 luma samples, an additional flag is signaled to indicate if a combined inter/intra prediction (CIIP) mode is applied to the current CU. As its name indicates, the CIIP prediction combines an inter prediction signal with an intra prediction signal, as is illustrated in Fig. 10. The inter prediction signal in the CIIP mode $P_{inter}$ is derived using the same inter prediction process applied to regular merge mode; and the intra prediction signal $P_{intra}$ is derived following the regular intra prediction process with the planar mode.

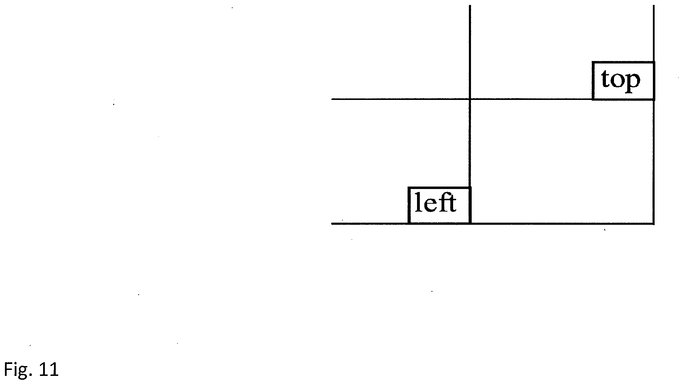

Then, the intra and inter prediction signals are combined using weighted averaging, where the weight value is obtained depending on the coding modes of the top and left neighboring blocks (illustrated in Fig. 11) as follows:

- If the top neighbor is available and intra coded, then set isIntraTop to 1, otherwise set isIntraTop to 0;
- If the left neighbor is available and intra coded, then set isIntraLeft to 1, otherwise set isIntraLeft to 0;
- If (isIntraLeft + isIntraTop) is equal to 2, then wt is set to 3;
- Otherwise, if (isIntraLeft + isIntraTop) is equal to 1, then wt is set to 2;
- Otherwise, set wt to 1.

The CIIP prediction is formed as follows:

$$P_{\mathrm{CIIP}} = \big((4 - wt) * P_{inter} + wt * P_{intra} + 2\big) \gg 2$$

*Intra template matching prediction (IntraTMP)*

Intra template matching prediction (IntraTMP) is a special intra prediction mode that copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

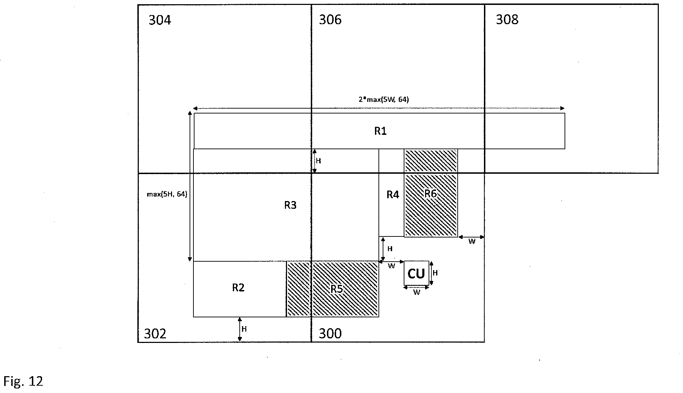

The prediction signal is generated by matching the L-shaped, Top-only or Left-Only causal neighbor of the current block with another block in a predefined search area illustrated in Fig. 12. There are 6 predefined search areas, i.e., R1 to R6 in Fig. 12 which contain the reconstructed samples from the top CTUs 304 to 308 and the left CTU 302 as well as part of the reconstructed samples within the current CTU 300 that are located above, left, bottom-left and top-right to the current block CU.

IntraTMP employs an implicit merge mode, where merge candidates are considered without signaling a merge flag or index. Specifically, the reference positions pointed by the block vectors of all the adjacent and non-adjacent merge candidates (coded in IntraTMP or IBC mode) are used as additional candidates beyond the default search areas. The same template matching cost is used to compare the merge positions and the defaults ones. For bi-directional IBC merge candidate, two candidates are retained corresponding to each reference frame. Similarly, for IntraTMP, two candidates are considered corresponding to the best candidate by template search and the coded candidate.

The sum of absolute differences (SAD) is used as a cost function.

A given search order of the 6 regions is utilized, e.g., R4, R5, R6, R1, R2, and R3. Within each region, the decoder constructs a candidate list of up to "19" template matching block vectors that are ranked in ascending order according to the template cost (SAD). The following modes are supported:

1- Single predictor: A single predictor is selected from the candidate list.
2- Fusion of multiple predictors: multiple predictors are blended multiple to derive the final prediction block. The blending weights are either computed from the template matching cost of each predictor, or with Wiener-filter based weight derivation method.
3- Sub-pel precision: When single predictor is used, sub-pel precision can be used with 1/2-pel precision, 1/4-pel precision and 3/4-pel precision, each with 8 possible directions.

4- Linear filter model: A linear filter can be learned between the reference template and current template and be applied the linear model to reference block. This mode can be used for single predictor when sub-pel precision is not used.

Additionally, IntraTMP with local illumination compensation is allowed. The following considerations are taken:

1- Usages of LIC and FLM (CCCM-like filtering) are mutually exclusive for a given CU.

2- Usages of LIC together with fusion in intra TMP is allowed.

3- Top-only and Left-only template usage for LIC model determination is allowed for screen content coding. For camera-captured coding, only the top-left template is employed.

4- Multi Mode Linear Model (MMLM) is supported similarly to IBC-LIC, for screen content coding.

When LIC is used for a given CU, the Intra TMP search process employs MRSAD rather than SAD distortion function.

The dimensions of all regions (SearchRange_w, SearchRange_h) are set proportional to the block dimension (BlkW, BlkH) to have a fixed number of SAD comparisons per pixel. That is:

$$\text{SearchRange\_w} = \min(64, a * \text{BlkW})$$

$$\text{SearchRange\_h} = \min(64, a * \text{BlkH})$$

where 'a' is a constant that controls the gain/complexity trade-off. In practice, 'a' may be equal to 5.

To speed-up the template matching process, the search range of all search regions is subsampled by a factor of 4. After finding the best match, a refinement process is performed. The refinement is done via a second template matching search around the best match with a reduced range.

The Intra template matching tool is enabled for CUs with a size less than or equal to 64 in width and height. This maximum CU size for Intra template matching is configurable.

The Intra template matching prediction mode is signaled at CU level through a dedicated flag when decoder-side intra mode derivation (DIMD) is not used for the current CU.

*Intra block copy (IBC)*

Intra block copy (IBC) is a tool adopted in HEVC extensions on SCC (Screen Content Coding Extension). IBC significantly improves the coding efficiency of screen content materials. Since the IBC mode is implemented as a block level coding mode, block matching (BM) is performed at the encoder to find the optimal block vector (or motion vector) for each CU. Here, a block vector is used to indicate the displacement from the current block to a reference block, which is already reconstructed inside the current picture. When combined with AMVR (Adaptive Motion. Vector Resolution), the IBC mode can switch between 1-pel and 4-pel motion vector precisions. An IBC-coded CU is treated as the third prediction mode other than intra or inter prediction modes. The IBC mode is applicable to the CUs with both width and height smaller than or equal to 64 luma samples.

At the encoder side, hash-based motion estimation is performed for IBC. The encoder performs RD (rate-distortion) check for blocks with either width or height no larger than 16 luma samples. For non-merge mode, the block vector search is performed using hash-based search first. If hash search does not return valid candidate, block matching based local search is performed.

In the hash-based search, hash key matching (32-bit CRC) between the current block and a reference block is extended to all allowed block sizes. The hash key calculation for every position in the current picture is based on 4x4 subblocks. For the current block of a larger size, a hash key is determined to match that of the reference block when all the hash keys of all $4 \times 4$ subblocks match the hash keys in the corresponding reference locations. If hash keys of multiple reference blocks are found to match that of the current block, the block vector costs of each matched reference are obtained and the one with the minimum cost is selected.

In block matching search, the search range is set to cover both the previous and current CTUs.

At CU level, IBC mode is signaled with a flag and it can be signaled as IBC AMVP (Advanced Motion Vector Prediction) mode or IBC skip/merge mode as follows:

- IBC skip/merge mode: a merge candidate index is used to indicate which of the block vectors in the list from neighboring candidate IBC coded blocks is used to predict the current block. The merge list consists of spatial, HMVP, and pairwise candidates.

- IBC AMVP mode: a block vector difference is coded in the same way as a motion vector difference. The block vector prediction method uses two candidates as predictors, one from left neighbor and one from above neighbor (if IBC coded). When either neighbor is not available, a default block vector is used as a predictor. A flag is signaled to indicate the block vector predictor index.

As described above, one aspect or tool of the codec concerns the combined intra and inter prediction (CIIP) tool in VVC and ECM which combines an intra prediction and a motion compensated inter prediction blocks in order to form the final block prediction. The intra prediction part of CIIP is determined from the reconstructed samples of the block's neighborhood. In VVC, the intra prediction mode is always set to be planar prediction, whereas in ECM there is also an option of deriving the intra prediction mode from the template samples of the block (for example using TIMD and DIMD methods). In the CIIP approach, the intra prediction aspect plays a filtering role to the inter prediction in order to adapt the motion compensated prediction's characteristics (coming from the reference frame) to the local block characteristics (in the current frame). In some cases, the intra prediction mode, derived from the neighboring template samples, may not represent the current block's characteristics in an optimal way. Thus, when combining it with the inter prediction, it may degrade the overall performance of the CIIP tool.

Other aspects or tools of the codec may also use derived intra prediction modes, e.g., for use in intra prediction methods of future blocks, or for use in a transform selection of the current block or of a co-located chroma block. Also in such use cases the intra prediction mode, derived from the neighboring template samples, may not represent the current block's characteristics in an optimal way and may degrade the overall performance of the tool of the codec using the derived intra prediction mode.

Embodiments of the present disclosure addresses the above drawbacks by providing approaches for improving the performance of one or more tools of the codec using a derived intra prediction mode. For example, the Combined Intra and Inter Prediction (CIIP) method may be improved by deriving the intra prediction part of the CIIP method in a more optimal way. Embodiments provide for deriving the intra prediction modes for CIIP in such a way that they are fully or partially dependent to the inter prediction mechanism of the CIIP block. In accordance with other embodiments, the texture analysis mechanism for determining the intra prediction modes may fully or partially use inter prediction samples. In accordance with yet other embodiments, the final intra prediction mode may be determined using both inter prediction samples as well as reconstructed samples of the current block. In accordance with further embodiments, the derived intra prediction mode may be used for a transform selection of the CIIP-coded block.

Embodiments provide various approaches for improving the intra prediction mode derivation for use with one or more tools of the codec.

In the this specification, the following common definitions and terminologies are used:

- Regular IPM: refers to conventional angular intra prediction modes, planar prediction as well as DC prediction.
- Non-IPM based prediction: refers to blocks that their prediction samples are obtained by means of methods that do not use regular intra prediction methods. Examples of such methods are:

    ◦ Matrix-based intra prediction (MIP)
    ◦ Extrapolation filter-based intra prediction (EIP)
    ◦ Intra template matching prediction (IntraTMP)
    ◦ Intra block copy (IBC)
    ◦ Inter predicted blocks

- IPM-fusion based prediction: refers to blocks that their prediction samples are obtained by means of combining two or more regular IPMs, one or more regular IPMs with a non-IPM based prediction such as intraTMP. Examples of such IPM-fusion based methods are:

    ◦ Fusion for template-based intra mode derivation (TIMD)
    ◦ Decoder side intra mode derivation (DIMD)
    ◦ Spatial Geometric partitioning mode (SGPM)

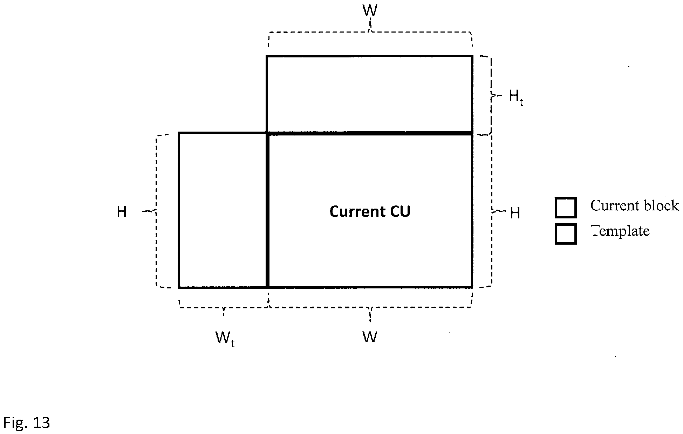

A template is referred to as reconstructed samples from the immediate neighborhood of the block. In some cases, the template may be referred to as reconstructed samples from both above and left neighborhood sides of the current block, in some other cases, the template may only refer to reconstructed samples from one of the neighborhood sides such as above or left. The template dimensions, width and height, may be fixed or may be adaptive, for example based on the block dimension. Fig. 13 shows an example of current block and the associated templates.

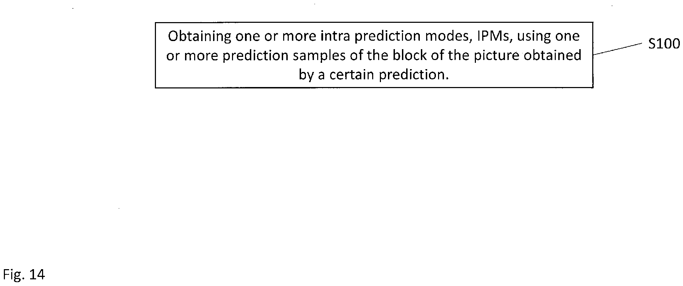

Fig. 14 illustrates a flow diagram of an embodiment of a method of processing one or more blocks of a picture. The method includes the following:

S 100: Obtaining one or more intra prediction modes, IPMs, using one or more prediction samples of the block of the picture obtained by a certain prediction.

In accordance with embodiments, one or more intra prediction modes are obtained using the inter prediction samples of a CIIP-coded block. The inter prediction may be a full-pel or fractional-pel motion compensated prediction.

In accordance with embodiments, the motion compensated prediction block may be a uni-prediction, bi-prediction or multi-hypothesis prediction block.

In accordance with embodiments, the CIIP method may comprise combining at least one intra prediction and at least one inter prediction.

In accordance with embodiments, the CIIP method may comprise combining at least one intra prediction and at least one block vector-based prediction such as IBC and intraTMP methods.

In accordance with embodiments, fusion or combination weights used for combining the intra prediction and the block vector-based prediction may be fixed. Alternatively, the weights may be adaptive and obtained at the decoder side using various criteria such as block size, inter prediction mode.

In accordance with embodiments, the combination weights may be derived using the template cost of the current block. For example, the template prediction may be done using the intra prediction mode and also using a motion compensated prediction (for example using the same motion vector as current block). The two predictions are compared to the reconstructed samples of the template and the combination weights are estimated according to the distortion cost of the two predictions.

In accordance with embodiments, the one or more intra prediction modes are obtained using the inter prediction samples of the block and some or all of the template samples from the reconstructed neighborhood of the block.

In accordance with embodiments, decision which template side samples to use may be determined dependent on a similarity between the template side samples and inter prediction block samples. If the template samples are similar enough to the prediction samples, then they are used for IPM derivation along the inter prediction samples. Otherwise, if the template samples are not similar enough to the prediction samples, then they are not used for IPM derivation.

In accordance with embodiments, the similarity may be determined using the IPM of each set of samples. For example, an obtained IPM of each template side samples may be compared to an obtained IPM of inter prediction samples.

In accordance with embodiments, the intra prediction mode derivation process may use a texture analysis mechanism such as DIMD or TIMD for determining the IPM values.

Embodiments provide various approaches for improving the intra prediction mode derivation for use in one or more aspects or tools of the codec.

Embodiments of the present disclosure are now described in more detail. Although the following embodiments are described with reference to the CIIP process, it is noted that the present disclosure is not limited to the CIIUP process. Rather, in accordance with other embodiments, the derived intra prediction modes, using the approaches described herein may be used in other aspects or tools of the codec.

Intra mode derivation from motion compensated prediction

In accordance with embodiments, for a current block, coded in CIIP method, the intra prediction mode (IPM) may be determined using some or all of the inter prediction (also referred to as motion compensated prediction) samples of the current block. For this purpose, a texture analysis mechanism is applied to the inter prediction samples in order to obtain the intra prediction mode. The texture analysis may be for example a DIMD-like method that obtains the histogram of gradients (HoG) of samples and maps them to the corresponding intra prediction modes. Using such a method, one or more intra prediction modes may be obtained for the prediction of the block. It is noted that the present disclosure is not limited to a DIMD-like texture analysis for obtaining the IPMs, rather this is provided only as an example. In accordance with other embodiments any texture analysis method may be for used determining the intra prediction modes.

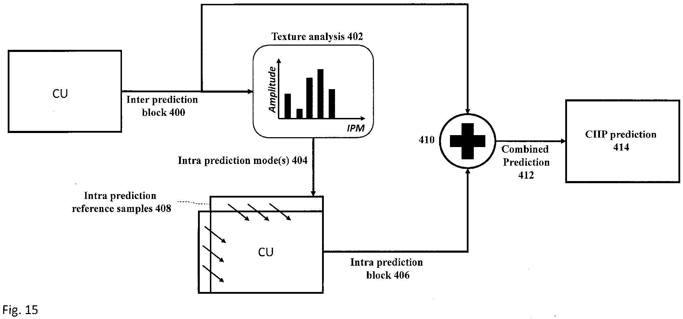

Fig. 15 illustrates a process of deriving IPMs for a CIIP coded block in accordance with embodiments of the present disclosure. As is illustrated, an inter prediction is performed on the current block CU so as to obtain an inter prediction block 400 of inter prediction samples. A texture analysis 402 is applied to the inter prediction samples for obtaining one or more IPMs 404 for performing an intra prediction on the current block CU so as to obtain an intra prediction block 406 of intra prediction samples. Obtaining the intra prediction block 406 of intra prediction samples may include using intra prediction reference samples 408. The inter prediction block 400 and the intra prediction block 406 are combined 410 so as to obtain the combined prediction 412 yielding the CIIP prediction 414 of the CU.

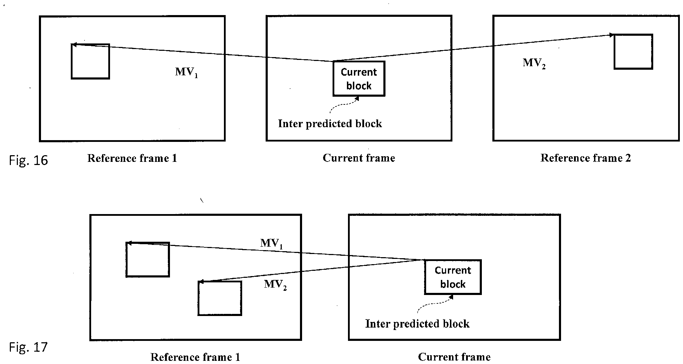

In accordance with embodiment, the inter prediction or motion compensated prediction may be a uni-prediction or a bi-prediction process. In the latter case, the final inter prediction is obtained by combining two different inter predicted blocks. The bi-prediction may be done from two different reference frames, as is illustrated in Fig. 16, or it may be done from the same reference frame as is illustrated in Fig. 17.

*Intra mode derivation from intra block copy prediction*

In accordance with other embodiments, similar to the CIIP method where the intra prediction and the inter prediction are combined to form the final block prediction, one may combine an intra prediction with an intra block copy (IBC) prediction in order to generate the final block prediction.

In this case, the IBC prediction may be done in various (existing) ways such as a block matching mechanism or a template-matching based (also referred to as intraTMP) search mechanism.

For a current block, coded according to the CIIP method, the intra prediction mode (IPM) may be determined using some or all the IBC prediction samples of the current block. The IPMs may be derived using a texture analysis method, such as DIMD, using the IBC prediction samples. Again, the present disclosure is not limited to a DIMD-like texture analysis for obtaining the IPMs. In accordance with other embodiments any texture analysis method may be for used determining the intra prediction modes.

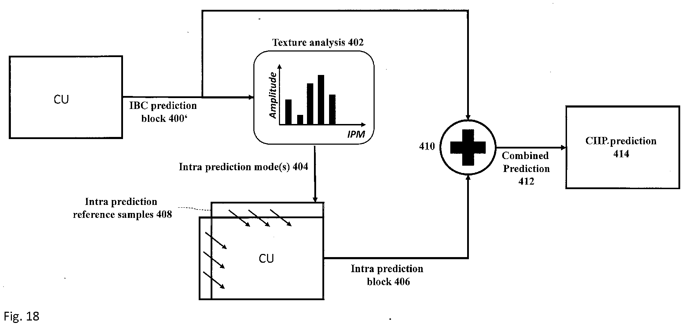

Fig. 18 illustrates a process of deriving IPMs for a CIIP coded block in accordance with embodiments of the present disclosure using an intra block copy (IBC) prediction as a basis for deriving the IPMs. Fig. 18 is similar to Fig. 15 except that an IBC prediction is performed on the current block CU so as to obtain, instead of the inter prediction block, an IBC prediction block 400' of IBC prediction samples. The texture analysis 402 is applied to the IBC prediction samples for obtaining one or more IPMs 404 for performing the intra prediction on the current block CU so as to obtain the intra prediction block 406 of intra prediction samples. Obtaining the intra prediction block 406 of intra prediction samples may include using intra prediction reference samples 408. The IBC prediction block 400' and the intra prediction block 406 are combined 410 so as to obtain the combined prediction 412 yielding the CIIP prediction 414 of the CU.

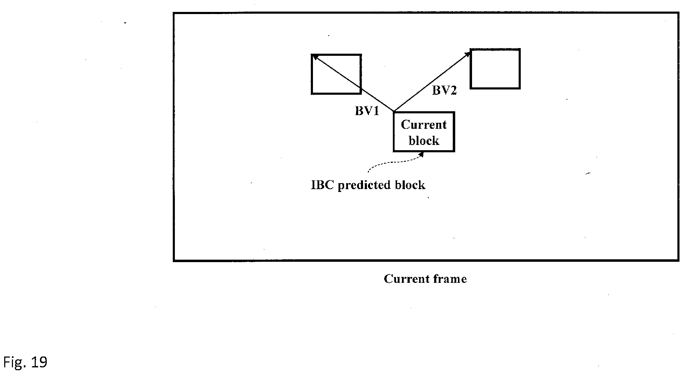

The IBC prediction may be a uni-prediction, a bi-prediction, a multi-hypothesis prediction or any existing block vector-based prediction mechanism. Fig. 19 illustrates an IBC prediction used in the CIIP process of Fig. 18 using, in accordance with embodiments of the present disclosure, a bi-prediction from the current frame.

The present invention is not limited to using IBC prediction samples of the current block for determining the intra prediction mode (IPM). In accordance with embodiments, in general, a block vector-based prediction may be used block for determining the intra prediction mode (IPM), e.g., the mentioned Intra block copy, IBC, process or an intra template matching prediction, IntraTMP.

Using both prediction and template samples

In accordance with embodiments, the intra prediction modes for a CIIP block may be determined using both inter prediction samples within the block as well as some of the template samples in the neighborhood of the block.

*Using both prediction and template samples in texture analysis*

In accordance with embodiments, the texture analysis mechanism may use both inter prediction samples as well as current block's template samples in order to determine the intra prediction modes of the CIIP-coded block.

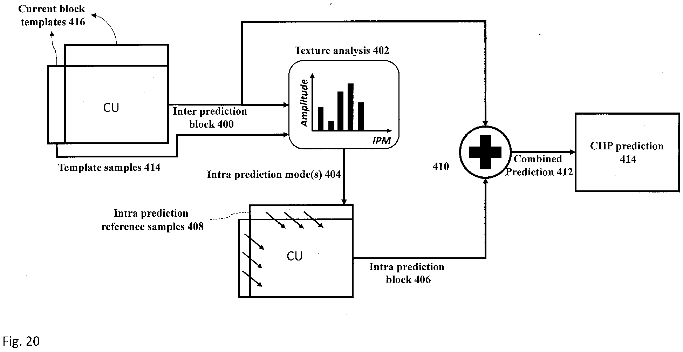

Fig. 20 illustrates a process of deriving IPMs for a CIIP coded block using both inter prediction and template samples. Fig. 20 illustrates a process of deriving IPMs for a CIIP coded block in accordance with embodiments of the present disclosure using an intra block copy (IBC) prediction as a basis for deriving the IPMs. Like in Fig. 15, also in Fig. 20 an inter prediction is performed on the current block CU so as to obtain an inter prediction block 400 of inter prediction samples. A texture analysis 402 is applied to the inter prediction samples for obtaining one or more IPMs 404 for performing an intra prediction on the current block CU so as to obtain an intra prediction block 406 of intra prediction samples. Obtaining the intra prediction block 406 of intra prediction samples may include using intra prediction reference samples 408. The inter prediction block 400 and the intra prediction block 406 are combined 410 so as to obtain the combined prediction 412 yielding the CIIP prediction 414 of the CU.

In addition, the DIMD-like method (as texture analysis) is applied to the inter prediction samples and to template samples 414 from the current block templates 416, e.g., from the above template and/or left template of the current block CU. Then the combined histogram of gradients is formed using the corresponding histogram of gradients from the template and inter prediction block. The intra modes with a highest amplitude in the combined histogram of gradients is then selected and used as IPMs in CIIP method.

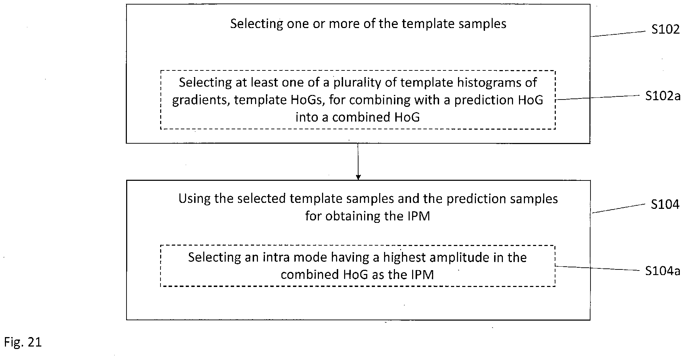

Fig. 21 illustrates a flow diagram of an embodiment of deriving or selecting an IPM from template samples and prediction samples. The method includes the following:

S102: Selecting one or more of the template samples.
S104 Using the selected template samples and the prediction samples for obtaining the IPM.

Optionally, selecting the one or more of the template samples may include selecting S 102a at least one of a plurality of template histograms of gradients, template HoGs, for combining with a prediction HoG into a combined HoG, and using the selected template samples and the prediction samples for obtaining the IPM may include selecting S104a an intra mode having a highest amplitude in the combined HoG as the IPM.

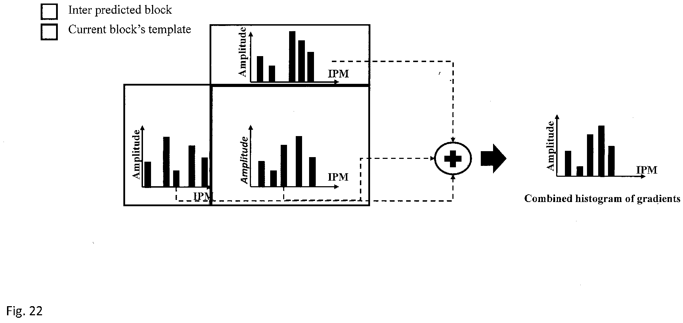

Fig. 22 illustrates deriving intra prediction modes, which are used for obtaining the IPM(s), using both inter prediction samples as well as template samples in accordance with embodiments of the present disclosure. The DIMD-like method is applied to the above template, the left template and the prediction samples within the block. Then the combined histogram of gradients is formed using the corresponding HoGs from the template and prediction block. The intra mode with highest amplitude in the combined histogram of gradients is then selected and used as IPM mode in the transform selection for the block.

For example, for a certain IPM, the combined HoG may be obtained as:

$$\text{HoG}_{\text{comb}}[\text{IPM}] = \text{HoG}_{\text{Pred}}[\text{IPM}] + \text{HoG}_{\text{aboveTmp}}[\text{IPM}] \ \text{HoG}_{\text{leftTmp}}[\text{IPM}]$$

where

| | |
|---|---|
| $\text{HoG}_{\text{comb}}[\text{IPM}]$ | combined HoG, |
| $\text{HoG}_{\text{Pred}}[\text{IPM}]$ | prediction HoG |
| $\text{HoG}_{\text{aboveTmp}}[\text{IPM}]$ | above template HoG |
| $\text{HoG}_{\text{leftTmp}}[\text{IPM}]$ | left side template HoG |

In accordance with embodiments, the IPM may be derived using the prediction samples within the block and within one of the template samples. This may be useful when the block samples are correlated only with one of the template side samples. Thus, combining the HoGs of the prediction block with both HoGs from the template may not be an optimal choice. Therefore, according to embodiments the template to be used is selected, and the template choice may be done in various ways.

In one embodiment, the template choice may be done by comparing the histogram of gradients of each template to the histogram of gradients of the prediction block. The HoG of the template that has higher similarity to the HoG of the prediction block is then selected and combined with the HoG of the prediction block. The similarity measure may be for example comparing the best IPM of the prediction block and the best IPM of each template side.

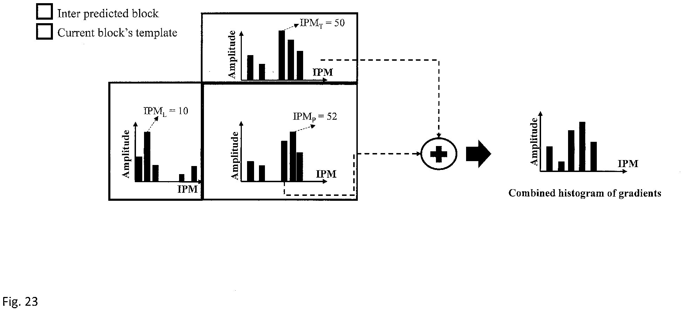

In Fig. 23 an example of combining the prediction block HoG and the HoG of one of the template sides is illustrated. The prediction block's $\text{IPM}_P$ is 52, above template's $\text{IPM}_T$ is 50 and left template's $\text{IPM}_L$ is 10. Since the $\text{IPM}_P$ is closer to $\text{IPM}_T$ and $\text{IPM}_L$ is very different from $\text{IPM}_P$, thus, the HoG of above template is combined with HoG of prediction block.

In another embodiment, the similarity metric for selecting the template may be different than the IPM based metric. For example, the DC or average values of the prediction block samples, and DC or average values of each template samples may be compared and the template side with similar DC/average values may be selected and used for creating the combined HoG.

In accordance with embodiments, when combining the HoG of prediction block and the HoGs of the template samples, one may use a sub-set of histogram information when combining. For example, if the IPM of the prediction block is $\text{IPM}_P$, then the HoGs around this IPM value from the template HoGs are used for generating the combined histogram of gradients.

In accordance with embodiments, the choice of template side HoGs to be combined with the prediction block HoG may be done explicitly by signaling a flag or an indicator in the bitstream. For example:

- index 0: both template sides are used,
- index 1: above template side is used,
- index 2: left template side is used.

In accordance with embodiments, when generating the combined HoG, a weighted combination of the HoGs may be considered. For example:

$$\text{HoG}_{\text{comb}}[\text{IPM}] = \text{W}_1 \times \text{HoG}_{\text{Pred}}[\text{IPM}] + \text{W}_2 \times \text{HoG}_{\text{aboveTmp}}[\text{IPM}] + \text{W}_3 \times \text{HoG}_{\text{leftTmp}}[\text{IPM}]$$

where

| | |
|---|---|
| $\text{HoG}_{\text{comb}}[\text{IPM}]$ | combined HoG, |
| $\text{HoG}_{\text{Pred}}[\text{IPM}]$ | prediction HoG |

| $HoG_{aboveTmp}[IPM]$ | above template HoG |
| $HoG_{leftTmp}[IPM]$ | left side template HoG |
| $W_1$ | weight for the prediction HoG, |
| $W_2$ | weight for the above template HoG, and |
| $W_3$ | weight for the left side template HoG. |

The weights may be fixed, or they may be determined based on various criteria such as template size, block size, IPM similarities, etc.

*Two stage IPM selection*

In accordance with embodiments, a list of N intra prediction modes may be derived using the inter prediction block samples using the methods described previously. For example, a DIMD-like texture analysis may be applied to the inter prediction samples and N intra modes with highest magnitude in the histogram of gradients are selected.

After forming the list of N IPMs, each IPM is used to predict the template samples of the block. The template samples prediction may be done similarly as in TIMD method.

The set of N IPMs are then sorted based on their distortion cost over the template. The IPM candidate with the lowest distortion cost over the template is then selected and used as final intra prediction mode in CIIP method.

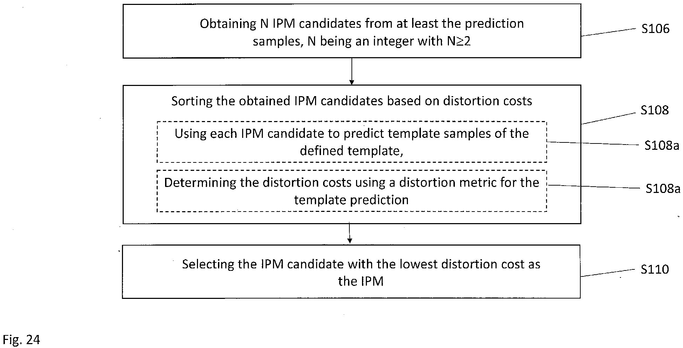

Fig. 24 illustrates a flow diagram of an embodiment of deriving or selecting a IPM using a template prediction based IPM selection. The method includes the following:

S106: Obtaining N IPM candidates from at least the prediction samples, N being an integer with $N \geq 2$.
S108: Sorting the obtained IPM candidates based on distortion costs, wherein the distortion costs may be obtained using a defined template of the reconstructed neighborhood of the block.
S110: Selecting the IPM candidate with the lowest distortion cost as the IPM.

Optionally, sorting the obtained IPM candidates based on distortion costs may include using S 108a each IPM candidate to predict template samples of the defined template, and determining S 108b the distortion costs using a distortion metric for the template prediction.

In accordance with embodiments, a set of N virtual-IPM candidate modes may be derived, with N being an integer and with $N \geq 2$. The set of N IPM candidates may be derived only from the prediction block samples using the texture analysis methods such as DIMD, or they are obtained by using both prediction block samples as well as at least some of the template samples. For example:

- The DIMD-like process may be applied to the prediction block samples and the N best IPMs from its histogram of gradients are selected to form the set of N IPMs.
- The DIMD-like process may be applied to the prediction block samples and to the template samples of the block. The N best IPMs from the combined HoG, which may be obtained as described above (embodiment "Using both prediction and template samples in texture analysis"), is selected to form the set of N IPMs.

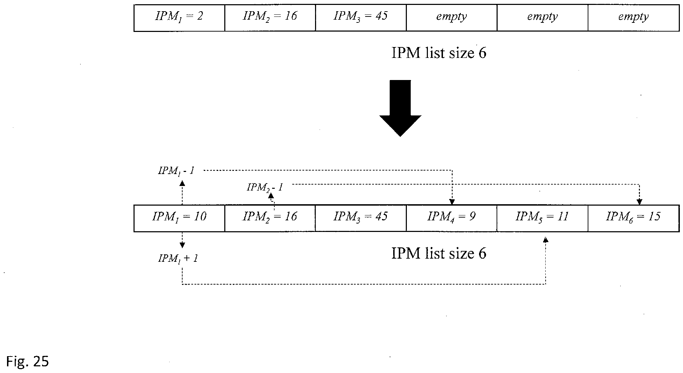

If a set of pre-defined N candidates are not achieved from the above process, the IPM candidate list may be filled by including nearby IPM values of the existing ones in the list. An example of such case is shown in Fig. 25 where the initial IPM candidate list of N = 6 candidates is determined but only 3 IPMs are obtained by the IPM generation process. The rest of the list is then filled by the nearby IPM modes (e.g., IPM1$\pm$1).

After forming the set of N IPM candidates, each IPM is used to predict the template samples of the block. The template samples prediction may be done similarly as in TIMD method.

The set of N IPMs are then sorted based on their distortion cost over the template. The IPM candidate with the lowest distortion cost over the template is then selected and used as final IPM in the transform selection of the block.

The distortion metric for the template prediction may be any existing distortion metrics such as a sum of absolute difference (SAD), a sum of absolute transform difference (SATD), a sum of squared error (SSE).

The above embodiments "Using both prediction and template samples in texture analysis" and "Two stage IPM selection" have been described with reference to an inter prediction block. The present disclosure is not limited to this, rather, in accordance with other embodiments, the prediction may also be an IBC prediction as described with reference to Fig. 18.

So far, embodiments of the present disclosure have been described with reference to the CIIP process. The present disclosure is not limited to the CIIUP process. Rather, in accordance with other embodiments, the derived intra prediction modes, using the approaches described herein may be used in other aspects or tools of the codec. The derived intra prediction modes, using the methods of this invention, may be used in other aspects of the codec.

In accordance with embodiments, the derived IPMs may be used in the intra prediction methods of future blocks. They may be used in the most probable mode (MPM) list generation of the future blocks. Alternatively, such IPMs may be used in coding a co-located block in a chroma channel through for example Direct Mode (DM) and MPM list.

In accordance with embodiments, in another use case the derived intra prediction modes may be used in the transform selection, such as LFNST, NSPT, MTS, of the current block.

In accordance with embodiments, in yet another use case the derived intra prediction modes may be used in the transform selection, such as LFNST, NSPT, MTS, of the co-located chroma block.

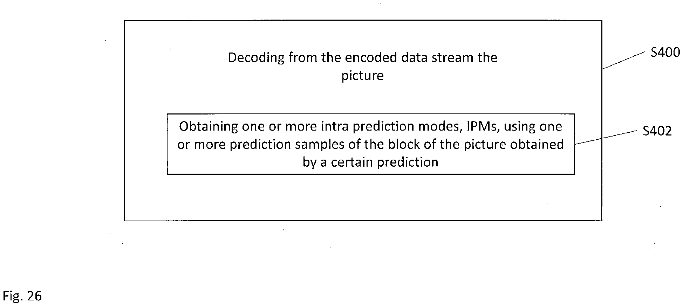

Fig. 26 illustrates a flow diagram of a method for decoding an encoded data stream, the encoded data stream including data representing a picture. The method includes the following:

S400: Decoding from the encoded data stream the picture.
Decoding the picture comprises obtaining S402 one or more intra prediction modes, IPMs, using one or more prediction samples of the block of the picture obtained by a certain prediction.

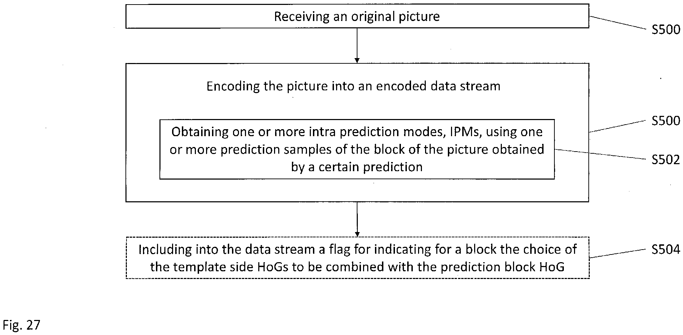

Fig. 27 illustrates a flow diagram of a method for encoding a picture into an encoded data stream. The encoded data stream includes data representing the picture and the method includes the following:

S500: Receiving an original picture.
S502: Encoding the picture into the encoded data stream.
Encoding the picture comprises obtaining S502 one or more intra prediction modes, IPMs, using one or more prediction samples of the block of the picture obtained by a certain prediction.

Optionally, the method comprises including S504 into the data stream or bitstream a flag for indicating the choice of the template side HoGs to be combined with the prediction block HoG.

Further embodiments

So far, the inventive concept has been described with reference to aspects and embodiments concerning methods of obtaining one or more IPMs, e.g., for decoding and for encoding. In accordance with further embodiments, the present disclosure also provides an apparatus of obtaining one or more IPMs as well as encoders/decoders including such an apparatus.

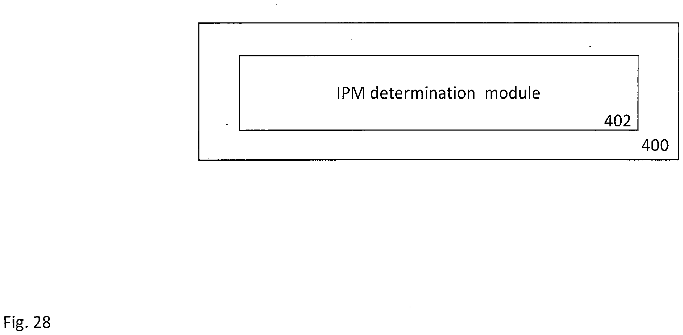

Fig. 28 illustrates a block diagram of an apparatus of predicting one or more blocks of a picture in accordance with embodiments of the present disclosure. The apparatus 400 includes the following modules:

402: An intra prediction mode, IPM, determination module configured to operate in accordance with embodiments of the present disclosure so as to obtain one or more intra prediction modes, IPMs, using one or more prediction samples of the block of the picture obtained by a certain prediction.

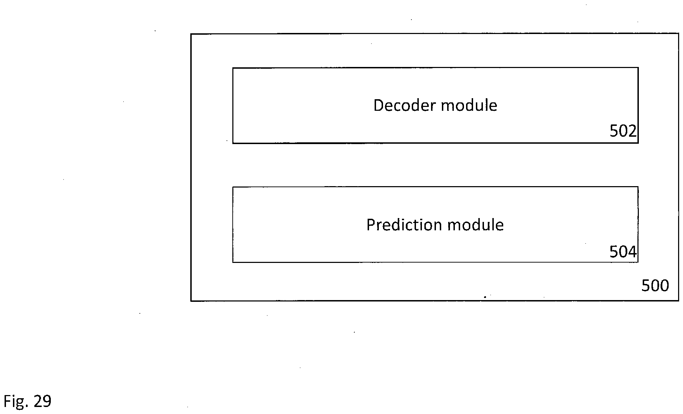

Fig. 29 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A prediction module, e.g., a prediction module 170 as depicted in Fig. 2. The prediction module 502 is configured to operate in accordance with embodiments of the present disclosure so as to obtain one or more intra prediction modes, IPMs, using one or more prediction samples of the block of the picture obtained by a certain prediction. For example, the prediction module 502 includes an apparatus as described with reference to Fig. 28.

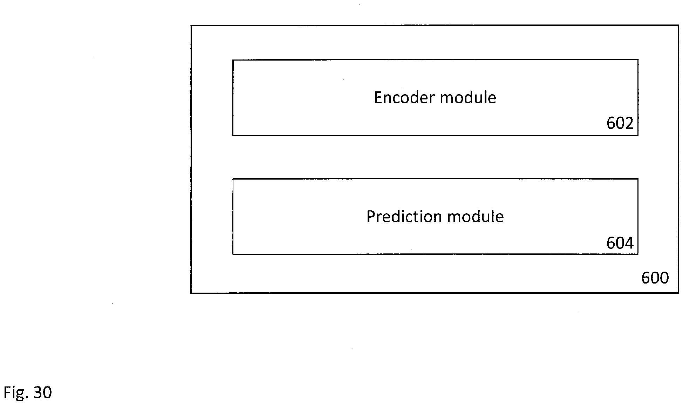

Fig. 30 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A prediction module, e.g., a prediction module 124 as depicted in Fig. 1. The prediction module 602 is configured to operate in accordance with embodiments of the present disclosure so as to obtain one or more intra prediction modes, IPMs, using one or more prediction samples of the block of the picture obtained by a certain prediction. For example, the prediction module 502 includes an apparatus as described with reference to Fig. 28.

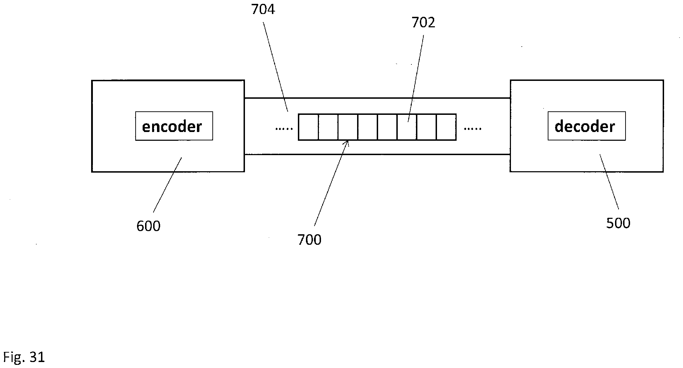

Fig. 31 illustrates a data stream 700 in accordance with embodiments of the present disclosure, which has encoded thereinto a picture and information data associated with the picture. For example, the data stream or bitstream 700 may be provided by an encoder 600 that performs the inventive method for encoding the picture into the data stream 700. The data stream 700 is transmitted to a decoder 500 via a wired or wireless transmission medium 704, like cable or a radio link, and the decoder 500 decodes from the data stream 700 the picture. The data stream includes a flag 702, which is encoded into the data stream by the encoder 600. The flag indicates for one or more blocks of the picture the choice of the template side HoGs to be combined with the prediction block HoG.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

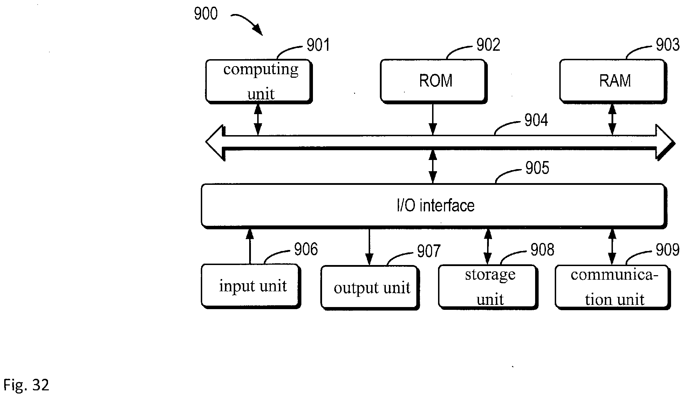

Fig. 32 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of processing one or more blocks of a picture, the method comprising: obtaining one or more intra prediction modes, IPMs, using one or more prediction samples of the block obtained by a certain prediction.

A 2nd embodiment provides the method of the 1st embodiment, wherein the certain prediction comprises:

- an inter prediction, or
- a block vector-based prediction.

A 3rd embodiment provides the method of the 2nd embodiment, wherein the inter prediction comprises a full-pel or fractional-pel motion compensated prediction obtaining a motion compensated prediction block.

A 4th embodiment provides the method of the 3rd embodiment, wherein the motion compensated prediction block comprises a uni-prediction, bi-prediction or multi-hypothesis prediction block.

A 5th embodiment provides the method of the 2nd embodiment, wherein the block vector-based prediction comprises an Intra block copy, IBC, process or an intra template matching prediction, IntraTMP, process.

A 6th embodiment provides the method of any one of the preceding embodiments, wherein the method comprises performing one or more of the following using the one or more obtained IPMs:

- a combined intra and inter prediction, CIIP, process,
- an intra prediction process of future blocks,
- a transform selection of the current block,
- a transform selection of a co-located chroma block.

A 7th embodiment provides the method of the 6th embodiment, wherein the one or more obtained IPMs are used

- in a most probable mode, MPM, list generation of the one or more future blocks, or
- in coding a co-located block in a chroma channel, e.g., through direct mode, DM, or MPM.

An 8th embodiment provides the method of the 6th or 7th embodiment, wherein the transform comprises:

- a multiple transform selection, MTS, or
- a low-frequency non-separable transform, LFNST, or
- a non-separable primary transform, NSPT, or
- any other transform coding mechanism that relies on an intra prediction direction for determining transform coding of the block.

A 9th embodiment provides the method of any one of the preceding embodiments, wherein the one or more IPMs are obtained by using a texture analysis method, e.g., by using a decoder side intra mode derivation, DIMD, process or a template-based intra mode derivation, TIMD, process.

A 10th embodiment provides the method of any one of the preceding embodiments, comprising:

- obtaining a prediction histogram of gradients, prediction HoG, using the one or more prediction samples obtained by the certain prediction, and
- obtaining from the prediction HoG the one or more IPMs.

An 11th embodiment provides the method of the 10th embodiment, wherein the one or more IPMs are obtained by selecting from the HoG those IPMs which are associated with a gradient exceeding a predefined threshold.

A 12th embodiment provides the method of any one of the 1st to 8th embodiments, wherein the one or more IPMs are obtained by using the one or more prediction samples of the block obtained by the certain prediction and one or more template samples from a reconstructed neighborhood of the block.

A 13th embodiment provides the method of the 12th embodiment, comprising:

- selecting one or more of the template samples, and
- using the selected template samples and the prediction samples for obtaining the IPM.

A 14th embodiment provides the method of the 13th embodiment, wherein

- at least one of a plurality of template histograms of gradients, template HoGs, is selected for combining with a prediction HoG into a combined HoG, and
- an intra mode from the combined HoG is selected as the IPM.

A 15th embodiment provides the method of the 14th embodiment,

wherein the reconstructed neighborhood of the block includes an above template and a left side template,

wherein a prediction histogram of gradients, prediction HoG, is obtained using the one or more prediction samples obtained by the certain prediction, wherein an above template HoG is obtained using one or more above template samples, and wherein a left side template HoG is obtained using one or more left side template samples,

wherein at least one of the above and left side template HoGs is selected for combining with the prediction HoG into a combined HoG.

A 16th embodiment provides the method of the 15th embodiment, wherein the one or more IPMs are obtaining by selecting from the combined HoG those IPMs which are associated with a gradient exceeding a predefined threshold.

A 17th embodiment provides the method of the 15th or 16th embodiment, wherein the prediction HoG and at least one of the above template HoG and the left side template HoG are combined into the combined HoG using a proper subset of information from the above template HoG and/or from the left side template HoG.

An 18th embodiment provides the method of the 17th embodiment, wherein the proper subset of information includes a certain number of gradients from the above template HoG and/or from the left side template HoG, wherein the certain number of gradients are located around a certain IPM in the prediction HoG, e.g., a largest IPM in the prediction HoG.

A 19th embodiment provides the method of any one of the 15th to 18th embodiments, wherein the one or more of the template samples are selected according to a similarity between the template samples and the prediction samples.

A 20th embodiment provides the method of the 19th embodiment, comprising:

- comparing each of the above template HoG and the left side template HoG with the prediction HoG,
- determining the similarity of each of the above template HoG and the left side template HoG with the prediction HoG, and
- combining the above template HoG and the left side template HoG with the prediction HoG dependent on the determined similarity.

A 21st embodiment provides the method of the 20th embodiment, wherein the similarity is determined using the IPMs of the template samples and the IPM of the prediction samples.

A 22nd embodiment provides the method of the 21st embodiment, wherein the similarity of the above template HoG and the left side template HoG to the prediction HoG is determined by comparing the best IPMs of the prediction block, the above template HoG and the left side template HoG.

A 23rd embodiment provides the method of any one of the 15th to 18th embodiments, wherein the between the template samples and the prediction samples is determined using a mean value of the prediction samples and a mean value of the template samples, e.g., Direct-Current, DC, or average values of the prediction samples, and DC or average values of the template samples.

A 24th embodiment provides the method of the 23rd embodiment, comprising:

- comparing the DC or average values of the prediction samples and the DC or average values of each of the above and left side template samples,
- determining a similarity of the DC or average values of each of the above and left side template samples to the DC or average values of the prediction samples, and
- combining the above template HoG and the left side template HoG with the prediction HoG dependent on the determined similarities.

A 25th embodiment provides the method of any one of the 19th to 24th embodiments, wherein, if the similarities of both the above template and the left side template are greater than a certain threshold, combining the above template HoG and the left side template HoG with the prediction HoG.

A 26th embodiment provides the method of any one of the 19th to 25th embodiments, wherein, if the similarity of the above template is greater than the certain threshold and the similarity of the left side template is less than the certain threshold, combining the above template HoG with the prediction HoG.

A 27th embodiment provides the method of any one of the 19th to 26th embodiments, wherein, if the similarity of the above template is less than the certain threshold and the similarity of the left side template is greater than the certain threshold, combining the left side template HoG with the prediction HoG.

A 28th embodiment provides the method of any one of the 19th to 27th embodiments, wherein, if the similarities of both the above template and the left side template are less than the certain threshold, combining the template HoG having a similarity closer to the certain threshold with the prediction HoG.

A 29th embodiment provides the method of any one of the 15th to 18th embodiments, wherein the one or more of the template samples are selected according to an index or a flag identifying the template samples to be selected.

A 30th embodiment provides the method of the 29th embodiment, wherein the index or the flag is obtained from a data stream, e.g., a bitstream, including data representing the picture.

A 31st embodiment provides the method of the 29th or 30th embodiment, wherein the index or the flag includes:

- a first value indicting that both the above template HoG and the left side template HoG are to be combined with the prediction HoG,
- a second value indicting that only the above template HoG is to be combined with the prediction HoG, and
- , a third value indicting that only the left side template HoG is to be combined with the prediction HoG.

A 32nd embodiment provides the method of any one of the 15th to 31st embodiments, comprising:

- weighting one or more of the prediction HoG, the above template HoG and the left side template HoG before combining them into the combined HoG.

A 33rd embodiment provides the method of the 32nd embodiment, wherein the combined HoG is determined as follows:

$$\mathrm{HoG_{comb}[IPM]} = W_1 \times \mathrm{HoG_{Pred}[IPM]} + W_2 \times \mathrm{HoG_{aboveTmp}[IPM]} + W_3 \times \mathrm{HoG_{leftTmp}[IPM]}$$

where

| | |
|---|---|
| $\mathrm{HoG_{comb}[IPM]}$ | combined HoG, |
| $\mathrm{HoG_{Pred}[IPM]}$ | prediction HoG |
| $\mathrm{HoG_{aboveTmp}[IPM]}$ | above template HoG |
| $\mathrm{HoG_{leftTmp}[IPM]}$ | left side template HoG |
| $W_1$ | weight for the prediction HoG, |
| $W_2$ | weight for the above template HoG, and |
| $W_3$ | weight for the left side template HoG. |

A 34th embodiment provides the method of the 33rd embodiment, wherein the weights are fixed.

A 35th embodiment provides the method of the 33rd embodiment, wherein the weights are obtained based on one or more criteria, e.g., a template size, a block size, IPM similarities or template cost.

A 36th embodiment provides the method of the 35th embodiment, wherein, for deriving the weights using the template cost of the current block,

- a template prediction is performed using an intra prediction mode and using a motion compensated prediction, e.g., using the same motion vector as for the current block,
- the intra prediction mode and the motion compensated prediction are compared to reconstructed samples of the template, and
- the weights are estimated according to the distortion cost of the intra prediction mode and the motion compensated prediction.

A 37th embodiment provides the method of any one of the 12th to 36th embodiments, comprising:

- testing at least two possible combinations of the prediction samples with the above template samples and the left side template samples,
- selecting a best preforming combination, e.g., according to a rate-distortion optimization, and
- inserting an index or a flag into a data stream, e.g., a bitstream, including data representing the picture, wherein the index or the flag identifies the selected combination.

A 38th embodiment provides the method of any one of the preceding embodiments, wherein

- N IPM candidates are obtained, N being an integer with N≥2,
- the obtained IPM candidates are sorted based on distortion costs, wherein the distortion costs may be obtained using a defined template of a reconstructed neighborhood of the block, and
- the IPM candidate with the lowest distortion cost over selected as the IPM.

A 39th embodiment provides the method of the 38th embodiment, wherein

- each IPM candidate is used to predict template samples of the defined template, and
- the distortion costs is determined using a distortion metric for the template prediction.

A 40th embodiment provides the method of the 39th embodiment, wherein the template samples are predicted using a template-based intra mode derivation, TIMD, process.

A 41st embodiment provides the method of the 39th or 40th embodiment, wherein the distortion metric for the template prediction is determined using one or more of the following:

- a sum of absolute difference, SAD,
- a sum of absolute transform difference, SATD,
- a sum of squared error, SSE.

A 42nd embodiment provides the method of any one of the 38th to 41st embodiments, wherein obtaining the N IPM candidates comprises

- deriving the N IPMs from the prediction block samples using a texture analysis methods, e.g., using a DIMD process, or
- obtaining the N IPMs by using both prediction block samples as well as at least some of the template samples.

A 43rd embodiment provides the method of the 42nd embodiment, wherein a histogram of gradients, HoG, is obtained for the prediction block samples, and wherein from the HoG a certain number of IPMs is included into a VIPM candidate list, e.g., the n best IPMs, with n=N or n≤N.

A 44th embodiment provides the method of the 43rd embodiment, wherein respective histograms of gradients, HoGs, are obtained for the prediction block samples and for the template samples, and wherein from each of the HoGs a certain number of IPMs is included into a VIPM candidate list, e.g., the respective best IPMs.

A 45th embodiment provides the method of the 43rd or 44th embodiment, wherein, if the IPM candidate list includes less than the N IPM candidates, the IPM candidate list is filled by including IPM values from the one or more HoGs, which are nearby of the obtained IPM candidates.

A 46th embodiment provides the method of any one of the preceding embodiments, wherein the intra prediction includes:

- a regular IPM prediction obtaining prediction samples by means of angular intra prediction modes, or a planar prediction, or a DC prediction, or
- a non-IPM based prediction obtaining prediction samples by means of methods that do not use regular intra prediction methods, or
- an IPM-fusion based prediction obtaining prediction samples by means of combining two or more regular IPMs, or one or more regular IPMs with a non-IPM based prediction.

A 47th embodiment provides the method of the 46th embodiment, wherein the non-IPM based prediction includes:

- a matrix-based intra prediction, MIP, or
- an extrapolation filter-based intra prediction, EIP, or
- an intra template matching prediction, intraTMP, or
- using an intra block copy, IBC, or
- using inter predicted blocks.

A 48th embodiment provides the method of the 46th or 47th embodiment, wherein the IPM-fusion based prediction includes:

- a fusion for template-based intra mode derivation, TIMD, or
- a decoder side *intra* mode derivation, DIMD, or
- a spatial geometric partitioning mode, SGPM.

A 49th embodiment provides a method for decoding an encoded data stream, the encoded data stream including data representing a picture, the method comprising:

decoding from the encoded data stream the picture,

wherein decoding the picture comprises processing one or more blocks according to the method of any one of the preceding embodiments for obtaining one or more intra prediction modes, IPMs.

A 50th embodiment provides a method for encoding a picture into an encoded data stream, the encoded data stream including data representing the picture, the method comprising:

receiving an original picture, and

encoding the picture into the encoded data stream,

wherein encoding the picture comprises processing one or more blocks according to the method of any one of the preceding embodiments for obtaining one or more intra prediction modes, IPMs.

A 51th embodiment provides a non-transitory computer-readable storage medium comprising instructions which, when executed by a computer, cause the computer to carry out the method of any one of the preceding embodiments.

A 52nd embodiment provides an apparatus of processing one or more blocks of a picture, the apparatus comprising: an intra prediction mode, IPM, determination module configured to obtain one or more intra prediction modes, IPMs, using one or more prediction samples of the block the picture obtained by a certain prediction.

A 53rd embodiment provides an apparatus for decoding an encoded data stream, the encoded data stream including data representing a picture, the apparatus comprising:

a decoder module configured to decode from the encoded data stream the picture, and

a prediction module, the prediction module including an apparatus according to the 51st embodiment.

A 54th embodiment provides an apparatus for encoding a picture into an encoded data stream, the encoded data stream including data representing the picture, the apparatus comprising:

an encoder module configured to receive the original picture and to encode the picture into the encoded data stream, and

a prediction module, the prediction module including an apparatus according to the 51st embodiment.

A 55th embodiment provides a data stream having encoded thereinto a picture, wherein the data stream comprises: a flag, the flag indicating a best preforming combination of one or more prediction samples of a block of the picture with one or more template samples from a reconstructed neighborhood of the block for obtaining one or more intra prediction modes, IPMs, usable, e.g., for a transform selection of the block.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audio-visual services, https://www.itu.int/rec/T-REC-H.264-202108-P/en
[2] H.265: High efficiency video coding, https://www.itu.int/rec/T-REC-H.265-202108-P/en

[3] H.266: Versatile video coding, https://www.itu.int/rec/T-REC-H.266-202008-I/en
[4] AV1 Bitstream & Decoding Process Specification, http://aomedia.org/av1/specification/

**Claims**

1.  A method of processing one or more blocks of a picture, the method comprising:
    obtaining one or more intra prediction modes, IPMs, using one or more prediction samples of the block obtained by a certain prediction.

2.  The method of claim 1, wherein the certain prediction comprises:

    - an inter prediction, or
    - a block vector-based prediction.

3.  The method of claim 2, wherein the inter prediction comprises a full-pel or fractional-pel motion compensated prediction obtaining a motion compensated prediction block, and wherein the motion compensated prediction block may comprise a uni-prediction, bi-prediction or multi-hypothesis prediction block.

4.  The method of any one of the preceding claims, wherein the method comprises performing one or more of the following using the one or more obtained IPMs:

    - a combined intra and inter prediction, CIIP, process,
    - an intra prediction process of future blocks,
    - a transform selection of the current block,
    - a transform selection of a co-located chroma block.

5.  The method of any one of the preceding claims, wherein the one or more IPMs are obtained by using a texture analysis method, e.g., by using a decoder side intra mode derivation, DIMD, process or a template-based intra mode derivation, TIMD, process.

6.  The method of any one of the preceding claims, comprising:

    - obtaining a prediction histogram of gradients, prediction HoG, using the one or more prediction samples obtained by the certain prediction, and
    - obtaining from the prediction HoG the one or more IPMs, e.g., by selecting from the HoG those IPMs which are associated with a gradient exceeding a predefined threshold.

7.  The method of any one of claims 1 to 5, wherein the one or more IPMs are obtained by using the one or more prediction samples of the block obtained by the certain prediction and one or more template samples from a reconstructed neighborhood of the block.

8.  The method of claim 7,

    wherein the reconstructed neighborhood of the block includes an above template and a left side template, wherein a prediction histogram of gradients, prediction HoG, is obtained using the one or more prediction samples obtained by the certain prediction, wherein an above template HoG is obtained using one or more above template samples, and wherein a left side template HoG is obtained using one or more left side template samples, and wherein at least one of the above and left side template HoGs is selected for combining with the prediction HoG into a combined HoG.

9.  The method of claim 8, wherein the one or more of the template samples are selected according to

    - a similarity between the template samples and the prediction samples, and wherein at least one of the above template HoG and the left side template HoG is selected using a similarity metric, or
    - a mean value of the prediction samples and a mean value of the template samples, e.g., Direct-Current, DC, or average values of the prediction samples, and DC or average values of the template samples, or
    - an index or a flag identifying the template HoGs to be combined with the prediction HoG into a combined HoG and obtained, e.g. from a data stream, e.g., a bitstream, including data representing the picture.

10. The method of claim 8 or 9, comprising:

   - weighting one or more of the prediction HoG, the above template HoG and the left side template HoG before combining them into the combined HoG.

11. The method of any one of the preceding claims, wherein

   - N IPM candidates are obtained, N being an integer with $N \geq 2$,
   - the obtained IPM candidates are sorted based on distortion costs, wherein the distortion costs may be obtained using a defined template of a reconstructed neighborhood of the block, and
   - the IPM candidate with the lowest distortion cost over is selected from the IPM candidates as the IPM.

12. The method of claim 11, wherein

   - each IPM candidate is used to predict template samples of the defined template, and
   - the distortion costs is determined using a distortion metric for the template prediction, wherein the template samples may be predicted using a template-based intra mode derivation, TIMD, process.

13. A non-transitory computer-readable storage medium comprising instructions which, when executed by a computer, cause the computer to carry out the method of any one of the preceding claims.

14. An apparatus of processing one or more blocks of a picture, the apparatus comprising:
   an intra prediction mode, IPM, determination module configured to obtain one or more intra prediction modes, IPMs, using one or more prediction samples of the block obtained by a certain prediction.

15. A data stream having encoded thereinto a picture, wherein the data stream comprises:
   a flag, the flag indicating a best preforming combination of one or more prediction samples of a block of the picture with one or more template samples from a reconstructed neighborhood of the block for obtaining one or more intra prediction modes, IPMs, usable, e.g., for a transform selection of the block.

Fig. 1

Fig. 2

16 input coefficients for 4x4 forward LFNST
64 input coefficients for 8x8 forward LFNST

Forward low-frequency
non-separable transform

Forward
Primary
Transform

Quantization

bitstream

Inverse
Primary
Transform

De-
Quantization

Inverse low-frequency
non-separable transform

8 input coefficients for 4x4 inverse LFNST
16 input coefficients for 8x8 inverse LFNST

Fig. 3

(A)

(B)

Fig. 4

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

Fig. 5

Fig. 6

Fig. 7

Fig. 8

Fig. 9

Fig. 10

Fig. 11

Fig. 12

W

$H_t$

H

**Current CU**

H

□ Current block
□ Template

$W_t$

W

Fig. 13

Obtaining one or more intra prediction modes, IPMs, using one or more prediction samples of the block of the picture obtained by a certain prediction. ⎯ S100

Fig. 14

Fig. 15

Fig. 16

Reference frame 1                Current frame                Reference frame 2

MV$_1$

Current block

Inter predicted block

MV$_2$

Fig. 17

Reference frame 1                Current frame

MV$_1$

MV$_2$

Current block

Inter predicted block

Texture analysis 402

Amplitude

IPM

CU

IBC prediction
block 400'

Intra prediction mode(s) 404

Intra prediction
reference samples 408

CU

Intra prediction
block 406

410

Combined
Prediction
412

CIIP prediction
414

Fig. 18

**Current frame**

Fig. 19

Current block
templates 416

Template samples 414

CU

Inter prediction
block 400

Texture analysis 402

Amplitude

IPM

Intra prediction mode(s) 404

Intra prediction
reference samples 408

CU

Intra prediction
block 406

410

Combined
Prediction 412

CIIP prediction
414

Fig. 20

| Selecting one or more of the template samples | S102 |
|---|---|
| *Selecting at least one of a plurality of template histograms of gradients, template HoGs, for combining with a prediction HoG into a combined HoG* | S102a |

| Using the selected template samples and the prediction samples for obtaining the IPM | S104 |
|---|---|
| *Selecting an intra mode having a highest amplitude in the combined HoG as the IPM* | S104a |

Fig. 21

Inter predicted block
Current block's template

Combined histogram of gradients

Fig. 22

Fig. 23

Obtaining N IPM candidates from at least the prediction
samples, N being an integer with N≥2 — S106

Sorting the obtained IPM candidates based on distortion costs — S108

Using each IPM candidate to predict template samples of the
defined template, — S108a

Determining the distortion costs using a distortion metric for the
template prediction — S108a

Selecting the IPM candidate with the lowest distortion cost as
the IPM — S110

Fig. 24

| $IPM_1 = 2$ | $IPM_2 = 16$ | $IPM_3 = 45$ | empty | empty | empty |

IPM list size 6

| $IPM_1 = 10$ | $IPM_2 = 16$ | $IPM_3 = 45$ | $IPM_4 = 9$ | $IPM_5 = 11$ | $IPM_6 = 15$ |

$IPM_1 - 1$

$IPM_2 - 1$

$IPM_1 + 1$

IPM list size 6

Fig. 25

Decoding from the encoded data stream the
picture ⟋ S400

Obtaining one or more intra prediction modes, IPMs, using one
or more prediction samples of the block of the picture obtained ⟋ S402
by a certain prediction

Fig. 26

Receiving an original picture — S500

Encoding the picture into an encoded data stream

Obtaining one or more intra prediction modes, IPMs, using one or more prediction samples of the block of the picture obtained by a certain prediction

— S500

— S502

Including into the data stream a flag for indicating for a block the choice of the template side HoGs to be combined with the prediction block HoG — S504

Fig. 27

IPM determination module

402

400

Fig. 28

Decoder module

502

Prediction module

504

500

Fig. 29

Encoder module

602

Prediction module

604

600

Fig. 30

704

702

encoder

decoder

..... ..........

600

700

500

Fig. 31

900

computing unit ─901

ROM ─902

RAM ─903

─904

─905

I/O interface

input unit ─906

output unit ─907

storage unit ─908

communica-tion unit ─909

Fig. 32

# EP 4 664 879 A1

EUROPEAN SEARCH REPORT

**Application Number**

EP 24 31 5290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/108480 A1 (LI LING [KR] ET AL) 6 April 2023 (2023-04-06) * paragraph [0019] - paragraph [0025] * * paragraph [0099] * * paragraph [0119] - paragraph [0126] * ----- | 1-15 | INV. H04N19/105 H04N19/11 H04N19/176 H04N19/593 |
| A | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/ documents/33_Teleconference/wg11/JVET-AG20 25-v1.zip JVET-AG2025-v1.docx [retrieved on 2024-03-29] * Sections 3.1.10, 3.1.11, 3.3.4 * ----- | 4 | |
| A | WO 2023/241347 A1 (MEDIATEK INC [CN]) 21 December 2023 (2023-12-21) * page 6, line 13 - page 9, line 9 * * page 12, line 16 - line 36 * ----- | 8-12 | TECHNICAL FIELDS SEARCHED (IPC) H04N |

The present search report has been drawn up for all claims

| Place of search | Date of completion of the search | Examiner |
|---|---|---|
| Munich | 15 November 2024 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5290

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | Publication date |
|---|---|---|---|
| US 2023108480 A1 | 06-04-2023 | CN 116530080 A | 01-08-2023 |
| | | EP 4229867 A1 | 23-08-2023 |
| | | JP 2024509231 A | 29-02-2024 |
| | | KR 20230085184 A | 13-06-2023 |
| | | US 2023108480 A1 | 06-04-2023 |
| | | US 2024275977 A1 | 15-08-2024 |
| | | WO 2023059972 A1 | 13-04-2023 |
| WO 2023241347 A1 | 21-12-2023 | TW 202406334 A | 01-02-2024 |
| | | WO 2023241347 A1 | 21-12-2023 |

EPO FORM P0459

For more details about this annex : see Official Journal of the European Patent Office, No. 12/82